(19) **Europäisches Patentamt / European Patent Office / Office européen des brevets**

(11) **EP 2 931 943 B1**

(12) **FASCICULE DE BREVET EUROPEEN**

(45) Date de publication et mention
de la délivrance du brevet:
**09.11.2016   Bulletin 2016/45**

(21) Numéro de dépôt: **13824389.4**

(22) Date de dépôt: **13.12.2013**

(51) Int Cl.:
*C25B 1/00* [(2006.01)]     *C25B 1/06* [(2006.01)]
*C25B 9/18* [(2006.01)]     *H01M 8/24* [(2006.01)]
*C25B 9/04* [(2006.01)]

(86) Numéro de dépôt international:
**PCT/IB2013/060936**

(87) Numéro de publication internationale:
**WO 2014/097101 (26.06.2014 Gazette 2014/26)**

(54) **PROCEDE D'ELECTROLYSE A HAUTE TEMPERATURE DE LA VAPEUR D'EAU ET D'UN AUTRE GAZ, INTERCONNECTEUR, REACTEUR D'ELECTROLYSE ET PROCEDES DE FONCTIONNEMENT ASSOCIES**

**VERFAHREN ZUR HOCHTEMPERATURELEKTROLYSE VON DAMPF UND ANDEREN GASEN, ZUGEHÖRIGER INTERKONNEKTOR, ELEKTROLYSEREAKTOR UND BETRIEBSVERFAHREN**

**METHOD FOR HIGH-TEMPERATURE ELECTROLYSIS OF STEAM AND ANOTHER GAS, RELATED INTERCONNECTOR, ELECTROLYSIS REACTOR AND OPERATING METHODS**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **17.12.2012   FR 1262174**

(43) Date de publication de la demande:
**21.10.2015   Bulletin 2015/43**

(73) Titulaire: **Commissariat à l'Énergie Atomique et aux Énergies Alternatives**
**75015 Paris (FR)**

(72) Inventeurs:
• **REYTIER, Magali**
  **F-38250 Villard De Lans (FR)**
• **AICART, Jérôme**
  **30000 Nimes (FR)**
• **LAURENCIN, Jérôme**
  **F-38360 Sassenage (FR)**
• **PETITJEAN, Marie**
  **F-38000 Grenoble (FR)**

• **PLANQUE, Michel**
  **F-38180 Seyssins (FR)**
• **SZYNAL, Philippe**
  **F-73800 Chignin (FR)**

(74) Mandataire: **Nony**
  **11 rue Saint-Georges**
  **75009 Paris (FR)**

(56) Documents cités:
FR-A1- 2 957 360     FR-A5- 2 125 729
US-A1- 2002 055 028     US-A1- 2009 090 637

• **SUNE DALGAARD EBBESEN ET AL: "Co-Electrolysis of Steam and Carbon Dioxide in Solid Oxide Cells", JOURNAL OF THE ELECTROCHEMICAL SOCIETY, ELECTROCHEMICAL SOCIETY, MANCHESTER, NEW HAMPSHIRE; US, vol. 159, 1 janvier 2012 (2012-01-01), pages F482-F489, XP008158751, ISSN: 0013-4651, DOI: 10.1149/2.076208JES**

EP 2 931 943 B1

**Description**

<u>Domaine technique</u>

La présente invention concerne le domaine de l'électrolyse de l'eau à haute température (EHT, ou EVHT pour électrolyse de la vapeur d'eau à haute température, ou HTE acronyme anglais pour « *High Temperature Electrolysis* », ou encore HTSE acronyme anglais pour « *High Temperature Steam Electrolysis* ») et de l'électrolyse d'un autre gaz choisi parmi le dioxyde de carbone CO2 ou le dioxyde d'azote NO2.

L'invention a trait plus particulièrement à une nouvelle réalisation d'un interconnecteur électrique et fluidique au sein d'un réacteur d'électrolyse à haute température (EHT), à empilement de cellules d'électrolyse élémentaires pour produire un gaz de synthèse ("*syngas*" en anglais pour un mélange H2 + CO) à partir de vapeur d'eau H2O et de dioxyde de carbone CO2 et ce, en vue de réaliser soit une synthèse selon le procédé Fischer-Tropsch suivi par un hydrocraquage pour produire du carburant liquide de type diesel ou kérosène, soit une synthèse de méthane, soit une synthèse de méthanol, soit une synthèse du diméthyléther (DME).

Cette nouvelle réalisation d'interconnecteur permet aussi la production d'un gaz de synthèse à partir de vapeur d'eau H2O et de dioxyde d'azote N02 et ce, en vue de réaliser la synthèse de l'ammoniac NH3.

On précise ici que, les dispositifs d'interconnexion, électrique et fluidique, aussi appelés interconnecteurs ou encore plaques d'interconnexion, sont les dispositifs qui assurent la connexion en série d'un point de vue électrique de chaque cellule d'électrolyse dans l'empilement des réacteurs EHT et en parallèle d'un point de vue fluidique, combinant ainsi la production de chacune des cellules. Les interconnecteurs assurent ainsi les fonctions d'amenée et de collecte de courant et délimitent des compartiments de circulation (distribution et/ou la collecte) des gaz.

<u>Art antérieur</u>

Parmi les solutions de stockage massif d'énergie déjà envisagées, le stockage hydraulique est déjà largement répandu. Les capacités restantes de ce type de stockage risquent d'être rapidement saturées. En outre, les installations hydrauliques nécessitent des conditions géographiques et géologiques particulières et peuvent de ce fait s'avérer assez onéreuses. Pour les problèmes de stockage à venir, le stockage hydraulique ne pourra donc être qu'une solution partielle.

Une solution alternative de stockage a également été envisagée : il s'agit du stockage par air comprimé (CAES acronyme anglais pour « *Compressed Air Energy Storage* »). Selon cette technologie, il est prévu de stocker de l'air comprimé produit avec l'électricité dans des cavités sous-terraines. Ces dernières exigent elles aussi des caractéristiques géographiques spécifiques, comme les cavités salines. Toutefois, le rendement de cette solution de stockage n'est pas satisfaisant.

L'hydrogène enfin est annoncé comme un vecteur d'énergie susceptible de pouvoir stocker massivement l'électricité dans certaines configurations : on peut citer ici le projet déjà réalisé en corse sous l'acronyme MYRTE (acronyme de Mission hYdrogène Renouvelable pour l'Intégration au Réseau Electrique) à l'initiative de la demanderesse.

Cependant, toutes ces solutions de stockage massif d'énergie requièrent des infrastructures importantes à développer (sites propres pour l'hydraulique, cavités sous-terraines, systèmes de stockage hydrogène). C'est pourquoi, plus récemment, le stockage massif d'énergie par conversion de l'électricité renouvelable en énergie chimique via la production de combustible de synthèse a fait une percée significative, représentant une alternative de stockage à fort potentiel. On peut citer ici la demande de brevet US 2009/0289227 qui évoque des solutions techniques de conversion.

Par ailleurs, réduire les émissions de dioxyde de carbone CO2 résultant de l'utilisation d'énergies fossiles, valoriser autant que possible le CO2 issu de l'utilisation de ces énergies plutôt que le stocker pour une durée indéterminée, utiliser à la demande l'électricité issue de sources d'énergie dite décarbonée, notamment lors des périodes de surproduction, transformer cette électricité en un produit stockable permettant éventuellement de produire de l'électricité à la demande lors des périodes de déficits de production sans avoir à faire appel à des énergies fortement carbonées sont autant d'objectifs à atteindre dans un souci d'efficacité globale.

La fabrication d'un gaz de synthèse, mélange de quantité variable entre monoxyde de carbone CO et d'hydrogène H2, à partir d'un mélange de vapeur d'eau et de dioxyde de carbone CO2 d'électricité dite décarbonée répond à ces objectifs. En effet, une telle fabrication de gaz de synthèse permet d'envisager la production d'hydrocarbures et notamment de méthane, principal composant du gaz naturel. La production du gaz naturel de synthèse donne la possibilité d'utiliser immédiatement toutes les infrastructures existantes développées pour cette énergie : réseaux de transport et de distribution, capacités de stockage, installations de production d'électricité, etc... En outre, il ressort également que le bilan carbone de cette production pourrait être nul, voire négatif, dès lors que l'électricité utilisée serait d'origine décarbonée et que le CO2 serait issu d'installations utilisant des énergies fossiles.

On distingue actuellement trois grandes voies technologiques pour obtenir un gaz de synthèse destiné à servir de combustible.

La première voie consiste à injecter un mélange d'hydrogène H2 et de dioxyde de carbone CO2 dans un catalyseur. La production d'un gaz de synthèse (H2 + CO) peut alors être faite via une première étape de fabrication d'hydrogène, par exemple par électrolyse de l'eau (I), suivie d'une réaction de gaz à l'eau inverse (RWGS acronyme anglais de « Reverse Water Gas Synthesis ») (II) suivant les équations:

$$\text{Electrolyse de l'eau: } H2O \rightarrow H2 + 1/2O2 \qquad (I)$$

$$\text{Réaction de gaz à l'eau inverse: } H2 + CO2 \rightarrow CO + H2O \qquad (II)$$

La deuxième voie consiste à produire le gaz de synthèse par électrolyse de dioxyde de carbone CO2 (III) et par électrolyse indépendante de l'eau H2O (I) suivant les équations suivantes puis par mélange des produits obtenus :

$$\text{Electrolyse de l'eau: } H2O \rightarrow H2 + 1/2O2 \qquad (I)$$

$$\text{Electrolyse du CO2: } CO2 \rightarrow CO + 1/2O2 \qquad (III)$$

La troisième voie enfin consiste à produire ce gaz de synthèse en une étape par une réaction dite de co-électrolyse de l'eau et du CO2 suivant l'équation suivante :

$$\text{Co-électrolyse: } CO2 + H2O \rightarrow CO + H2 + O2 \text{ (IV)}.$$

Pour réaliser l'électrolyse de l'eau (I), il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en oeuvre l'électrolyse à haute température, il est connu d'utiliser un électrolyseur de type SOEC (acronyme anglais de « *Solid Oxyde Electrolyte Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H2O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz d'hydrogène H2 et des ions oxygène. Le d'hydrogène est collecté et évacué en sortie de compartiment à hydrogène. Les ions oxygène $O^{2-}$ migrent à travers l'électrolyte et se recombinent en d'oxygène à l'interface entre l'électrolyte et l'électrode à oxygène (anode).

Chacune des trois voies technologiques existantes pour obtenir un gaz de synthèse, détaillées ci-dessus, a ses inconvénients et avantages propres que l'on peut détailler comme suit.

L'électrolyse indépendante des deux gaz selon la deuxième voie présente l'avantage majeur d'une grande flexibilité de gestion du mélange H2/CO. Par contre, les inconvénients majeurs de cette deuxième voie sont d'avoir à investir dans deux électrolyseurs (réacteurs d'électrolyse) séparés et de ne pas avoir de couplage thermique important entre les deux réactions (I) et (III).

La première voie permet d'avoir un meilleur couplage thermique lorsqu'on réalise l'électrolyse de la vapeur d'eau à haute température (I) qui dégage de la chaleur en mode exothermique, qui peut être utilisée de manière efficace par la réaction de gaz à l'eau inverse (II) qui est endothermique. Ceci dit, la réaction RWGS ne supporte que très peu d'eau en entrée, ce qui oblige à condenser l'eau entre les réactions (I) et (II) et alourdit considérablement la facture de ce procédé.

Enfin, la co-électrolyse de la vapeur d'eau et du CO2 (IV) selon la troisième voie offre potentiellement les mêmes avantages énergétiques et économiques que ceux décrits ci-dessus pour la première voie (réactions (I) et (II)) sans l'inconvénient d'avoir à réaliser une condensation intermédiaire. Son intérêt réside dans la possibilité de réaliser la réaction de co-électrolyse (IV) dans un même réacteur d'électrolyse en maintenant celui-ci dans une gamme de températures voisines de 800°C. En effet à cette température, les tensions requises pour la réduction du CO2 en CO et de l'H2O en H2 sont quasi identiques. A titre d'exemple, les tensions à l'abandon, c'est-à-dire les tensions électriques obtenues sans courant électrique mais uniquement grâce aux différents gaz de part et d'autre d'une cellule, pour un mélange de 90% d'espèce oxydée et 10% d'espèce réduite à 800°C sont respectivement égales à 0,852V pour les couples H2O, H2/O2 et 0,844V pour les couples CO2, CO/O2.

De plus, la co-électrolyse à haute température présente le même intérêt énergétique que l'électrolyse de la vapeur d'eau entre 750 et 900°C par rapport à l'électrolyse de l'eau à basse température. En effet, l'énergie nécessaire à la dissociation des molécules $H_2O$ est diminuée de l'énergie de vaporisation. Par ailleurs, les cinétiques des réactions d'électrolyse de l'$H_2O$ et du $CO_2$ sont fortement thermiquement activées et suivent une loi d'Arrhenius avec des énergies d'activation de l'ordre de 120kj/mol. Par conséquent, l'efficacité des réactions s'améliorent fortement lorsque la température est augmentée. La plus grande activité électrochimique à haute température permet en outre de s'affranchir de catalyseur onéreux, tel que le platine nécessaire à plus basses températures. En outre, la production de gaz de synthèse dans le compartiment cathodique du réacteur de co-électrolyse s'accompagne d'une production d'oxygène dans le compartiment anodique pouvant être valorisé par la suite, par exemple pour l'oxycombustion du gaz naturel.

Cela étant, si la co-électrolyse à haute température (IV) telle qu'envisagée offre les avantages précités que sont l'investissement d'un unique réacteur d'électrolyse, le couplage thermique entre les différentes réactions, elle a pour inconvénient de ne pas permettre l'obtention de ratio H2/CO variable dans le gaz de mélange à la sortie du réacteur. Autrement dit, lorsqu'on réalise la co-électrolyse, un ratio H2/CO en sortie souhaitée impose un ratio H2O/CO2 donné en entrée. En effet, un fonctionnement proche du point de fonctionnement thermo-neutre fixe la tension à appliquer à l'électrolyseur. Ainsi, pour un ratio souhaité de H2/CO en sortie avec un taux de conversion de l'eau proche de 100%, les débits et compositions d'entrée en $CO_2$ et $H_2O$ doivent nécessairement être déterminés.

Or, chaque gaz de synthèse destiné à produire un combustible nécessite un ratio H2/CO donné en fonction du combustible visé. Le tableau 1 ci-dessous illustre ainsi les ratios nécessaires en fonction de procédés de synthèse de différents combustibles :

**TABLEAU 1**

| PROCEDE DE SYNTHESE | PRODUIT COMBUSTIBLE OBTENU | RATIO H2/CO NECESSAIRE |
|---|---|---|
| synthèse du méthane | Gaz naturel | 1/3 |
| synthèse du méthanol | méthanol | 1/2 |
| synthèse du diméthyléther (DME) | DME | 1/1 |
| synthèse Ficher Tropsch | Diesel | 1/2 |

De plus, le point de fonctionnement retenu fixe aussi les conditions thermiques dans le réacteur d'électrolyse. En effet, pour les électrolyses réalisées à haute température, l'énergie $\Delta H$ nécessaire à la dissociation de la molécule d'entrée ($H_2O$ ou $CO_2$) peut être apportée sous forme électrique et/ou de chaleur. L'énergie thermique apportée Q se définit alors en fonction de la tension U aux bornes de chaque cellule d'électrolyse par la relation :

$$Q = \frac{I}{2F}\Delta H - U \cdot I \,,$$

dans laquelle U est la tension électrique, I est le courant électrique et F est la constante de Faraday. Ainsi, on définit trois régimes de fonctionnement, correspondant à trois modes thermiques différents pour l'empilement de cellules d'électrolyse :

- le mode dit autothermique dans lequel la tension imposée Uimp est égale à $\Delta H$ / 2F. La chaleur consommée par la réaction de dissociation est complètement compensée par les différentes résistances électriques de l'électrolyseur (irréversibilités). Le réacteur d'électrolyse (électrolyseur) n'a pas besoin de gestion thermique particulière tout en restant stable en température.
- le mode dit endothermique dans lequel la tension imposée Uimp est inférieure à $\Delta H$ / 2F. L'électrolyseur consomme plus de chaleur que les pertes électriques en son sein. Cette chaleur nécessaire doit alors lui être apportée par un autre moyen, sous peine de voir sa température chuter irrémédiablement.
- le mode dit exothermique dans lequel la tension imposée Uimp est supérieure à $\Delta H$ / 2F. L'électrolyse consomme alors moins de chaleur que les pertes électriques par effet Joule. Ce dégagement de chaleur au sein de l'électrolyseur doit alors être évacué par un autre moyen, sous peine de voir sa température augmenter de manière rédhibitoire.

Le mode endothermique nécessite une consommation moindre d'électricité : il y a donc peu de production et il faut fournir de la chaleur au réacteur d'électrolyse. L'intérêt de ce mode endothermique réside dans la disponibilité d'une source de chaleur peu coûteuse. Tout dépend alors de la nature et de la température de cette source thermique.

A contrario, le mode exothermique nécessite une consommation plus importante d'électricité : il y a donc une production importante, mais il faut refroidir le réacteur d'électrolyse, ce qui peut être très coûteux. L'intérêt de ce mode exothermique dépend alors beaucoup du coût de l'électricité et de l'utilisation de la chaleur excédentaire.

Il existe un besoin de trouver une nouvelle voie technologique pour produire un gaz de synthèse destiné à servir de combustible, notamment en s'affranchissant des inconvénients des trois voies existantes précitées tout en conservant leurs avantages.

Un but de l'invention est de répondre au moins en partie à ce besoin.

Un autre but de l'invention est de proposer un procédé et réacteur de production d'un gaz de synthèse, permettant d'atteindre le but précédent et d'obtenir un ratio H2/CO variable.

Exposé de l'invention

Pour ce faire, l'invention concerne, sous l'un de ses aspects, un procédé d'électrolyse à haute température de la vapeur d'eau $H_2O$ et d'un autre gaz à électrolyser choisi parmi le dioxyde de carbone $CO_2$ et le dioxyde d'azote $NO_2$, mis en oeuvre dans un réacteur d'électrolyse comportant un empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires, selon lequel on alimente et on distribue la vapeur d'eau à la cathode d'une des deux cellules élémentaires adjacentes et on alimente et on distribue soit du dioxyde de carbone soit du dioxyde d'azote à la cathode de l'autre des deux cellules élémentaires.

Autrement dit, le procédé selon l'invention consiste essentiellement à réaliser une co-électrolyse simultanée de l'eau et d'un autre gaz choisi parmi le $CO_2$ ou le $NO_2$, non pas comme dans l'état de l'art en les mélangeant au préalable, mais de manière séparée de sorte à réaliser un type d'électrolyse par cellule.

Autrement dit encore, dans le procédé selon l'invention, la vapeur d'eau et le $CO_2$ ou le $NO_2$ s'écoulent indépendamment l'un de l'autre sur deux cellules adjacentes, les gaz $O_2$ produits des deux électrolyses étant par contre récupérés de manière commune.

Selon un mode avantageux de l'invention, on définit un régime de fonctionnement en mode exothermique pour l'électrolyse de la vapeur d'eau à la cathode d'une des deux cellules élémentaires adjacentes et simultanément on réalise un régime de fonctionnement en mode endothermique pour l'électrolyse du dioxyde de carbone ou dioxyde d'azote à la cathode de l'autre des deux cellules élémentaires adjacentes, la chaleur dégagée par l'électrolyse de la vapeur d'eau étant apte à apporter au moins en partie la chaleur requise par l'électrolyse du dioxyde de carbone ou du dioxyde d'azote.

Alternativement, selon un mode avantageux, on définit un régime de fonctionnement en mode exothermique pour l'électrolyse du dioxyde de carbone ou dioxyde d'azote à la cathode à la cathode d'une des deux cellules élémentaires adjacentes et simultanément on réalise un régime de fonctionnement en mode endothermique pour l'électrolyse de la vapeur d'eau de l'autre des deux cellules élémentaires adjacentes, la chaleur dégagée par l'électrolyse du dioxyde de carbone ou dioxyde d'azote étant apte à apporter au moins en partie la chaleur requise par l'électrolyse de la vapeur d'eau.

Ainsi, le procédé selon l'invention permet de gérer au mieux la thermique de la réaction d'électrolyse de la vapeur d'eau H2O par la thermique de la réaction d'électrolyse de l'autre gaz choisi parmi le $CO_2$ ou le $NO_2$, tout en obtenant un ratio H2/CO en sortie que l'on peut adapter à souhait.

L'invention concerne également, sous un autre de ses aspects, un dispositif formant un interconnecteur électrique et fluidique pour l'électrolyse à haute température de la vapeur d'eau et d'un autre gaz à électrolyser choisi parmi le dioxyde de carbone $CO_2$ et le dioxyde d'azote N02, le dispositif consistant en trois tôles planes , allongées selon deux axes de symétrie (X, Y) orthogonaux entre eux, l'une des tôles d'extrémité étant destinée à venir en contact mécanique avec le plan d'une cathode d'une cellule d'électrolyse élémentaire et l'autre des tôles d'extrémité étant destinée à venir en contact mécanique avec le plan d'une anode d'une cellule d'électrolyse élémentaire adjacente, chacune des deux cellules d'électrolyse élémentaires adjacentes de type SOEC étant formée d'une cathode, d'une anode, et d'un électrolyte intercalé entre la cathode et l'anode, dispositif dans lequel

- chacune des trois tôles planes comporte une partie centrale non percée et est percée, à la périphérie de sa partie centrale, d'au moins cinq lumières, les premières à quatrième lumières de chaque tôle étant allongées sur une longueur correspondant à une partie de la longueur de la partie centrale selon l'un des axes X des tôles et étant réparties deux à deux de part et d'autre dudit axe X, tandis que la cinquième lumière est allongée sur une longueur correspondant sensiblement à la longueur de la partie centrale selon l'autre des axes Y,

- une des tôles d'extrémité, dite première tôle d'extrémité, comporte en outre une sixième et septième lumières agencées symétriquement de part et d'autre de l'axe X, à l'intérieur de ses premières à quatrième lumières, et sont allongées sur une longueur correspondant sensiblement à la longueur de la partie centrale selon l'axe X, tandis que l'autre des tôles d'extrémité, dite deuxième tôle d'extrémité, comporte en outre une sixième lumière à l'intérieur

5

de sa cinquième lumière, et allongée sur une longueur correspondant sensiblement la longueur de la partie centrale selon ledit axe Y, et,

- les première, troisième, et cinquième lumières de la tôle centrale étant élargies par rapport respectivement aux première, troisième et cinquième lumières de chaque tôle d'extrémité, tandis que les deuxième et quatrième lumière des trois tôles sont de dimensions sensiblement identiques entre elles,
- toutes les lumières élargies de la tôle centrale comportent dans leur partie élargie, des languettes de tôles espacées les unes des autres en formant un peigne, chacune des fentes définie entre le bord d'une fente élargie et une languette ou entre deux languettes consécutives débouchant sur une des lumières intérieures de la première ou deuxième tôle d'extrémité,
- les trois tôles sont stratifiées et assemblées entre elles telles que:

  • les languettes de tôles forment des entretoises d'espacement entre première et deuxième tôles d'extrémité respectivement entre les première et sixième lumières de la première tôle, entre les troisième et septième lumières de la première tôle d'extrémité, et entre les cinquième et sixième lumières de la deuxième tôles d'extrémité,
  • chacune des première à cinquième lumières de l'une des trois tôles est en communication fluidique individuellement respectivement avec l'une des première à cinquième lumières correspondantes des deux autres tôles,
  • la première ou alternativement la deuxième lumière de la première tôle d'extrémité est en communication fluidique avec la sixième lumière de la première tôle d'extrémité par le biais des fentes la première lumière élargie de la tôle centrale,
  • la troisième ou alternativement la quatrième lumière de la première tôle d'extrémité est en communication fluidique avec la septième lumière de la première tôle d'extrémité par le biais des fentes de la troisième lumière élargie de la tôle centrale,
  • la cinquième et la sixième lumières de la deuxième tôle d'extrémité sont en communication fluidique par le biais des fentes de la cinquième lumière élargie de la tôle centrale.

Selon une variante avantageuse, lorsqu'on souhaite évacuer l'oxygène produit par les deux types de réactions d'électrolyse, l'interconnecteur est tel que :

- la première tôle d'extrémité comporte en outre une huitième lumière allongée sur une longueur correspondant sensiblement à la longueur de la partie centrale selon l'autre des axes Y et agencée à l'opposé de sa cinquième lumière par rapport à l'axe Y,
- la deuxième tôle d'extrémité comporte en outre une septième lumière allongée sur une longueur correspondant sensiblement à la longueur de la partie centrale selon l'autre des axes Y et agencée à l'opposé de sa cinquième lumière par rapport à l'axe Y, et une huitième lumière allongée sur une longueur correspondant sensiblement la longueur de la partie centrale selon ledit axe Y, et agencée à l'opposé de sa sixième lumière par rapport à l'axe Y,
- la tôle centrale comporte en outre une sixième lumière élargie par rapport à la huitième de la première tôle d'extrémité et à la septième lumière de la deuxième tôle d'extrémité,
- les trois tôles sont assemblées entre elles telles que la septième et la huitième lumières allongées selon l'axe Y de la deuxième tôle d'extrémité sont en communication fluidique par le biais de la sixième lumière de la tôle centrale.

De préférence, les trois tôles sont assemblées entre elles par soudure ou par brasure, de préférence encore par des lignes de soudure (ls) fermées individuellement autour de chaque communication fluidique.

De préférence, les trois tôles sont en acier ferritique à environ 20% de chrome, de préférence en CROFER® 22APU ou le FT18TNb, à base Nickel de type Inconel® 600 ou Haynes®. Chacune des trois tôles a de préférence une épaisseur comprise entre 0,1 et 1mm.

Selon une variante avantageuse, les trois tôles sont percées à leur périphérie de lumières supplémentaires adaptées pour loger des tirants de fixation.

L'invention concerne également, sous un autre aspect, un réacteur d'électrolyse comportant un empilement de cellules d'électrolyse élémentaires de type SOEC formées chacune d'une cathode, d'une anode et d'un électrolyte intercalé entre la cathode et l'anode, et une pluralité d'interconnecteurs électrique et fluidique décrits précédemment, agencés chacun entre deux cellules élémentaires adjacentes avec la première tôle d'extrémité en contact électrique avec la cathode de l'une des deux cellules élémentaires et la deuxième tôle d'extrémité en contact électrique avec l'anode de l'autre des deux cellules élémentaires, dans lequel dans l'un de deux interconnecteurs adjacents, la communication fluidique est réalisée entre d'une part la première et la sixième lumières de la première tôle d'extrémité et d'autre part la troisième et la septième lumières de la première tôle d'extrémité, tandis que dans l'autre des deux interconnecteurs adjacents, la communication fluidique est réalisée entre d'une part la deuxième et la sixième lumières de la première tôle d'extrémité et d'autre part la quatrième et la septième lumières de la première tôle d'extrémité.Selon un mode de réalisation avantageux la résistance électrique d'une des deux cellules élémentaires adjacentes est différente de la résistance électrique de l'autre des deux cellules élémentaires adjacentes. On peut ainsi gérer la thermique d'une des deux réactions d'électrolyse, par exemple celle de la vapeur d'eau, par l'autre des deux réactions d'électrolyse, par exemple celle du dioxyde de carbone et réciproquement.

Selon ce mode, une variante préférée consiste à ce que la surface active d'au moins une électrode de l'une deux cellules élémentaires adjacentes soit différente de la surface active d'au moins une électrode de l'autre des cellules élémentaires adjacentes. Ainsi, de préférence, les cellules élémentaires d'électrolyse sont de type à cathode support, et la surface active de l'anode de l'une des deux cellules élémentaires adjacentes est différente de la surface active de l'anode de l'autre des deux cellules élémentaires adjacentes.

L'invention concerne enfin sous encore un autre de ses aspects, un procédé de fonctionnement d'un réacteur d'électrolyse qui vient d'être décrit, selon lequel :

- on alimente les premières lumières en vapeur d'eau et simultanément les deuxièmes lumières en un autre gaz à électrolyser choisi parmi le dioxyde de carbone CO2 et le dioxyde d'azote N02,
- on récupère l'hydrogène produit par l'électrolyse de la vapeur d'eau, dans les lumières et simultanément le monoxyde de carbone ou le monoxyde d'azote produit par l'électrolyse de l'autre gaz dans les quatrièmes lumières et simultanément l'oxygène produit à la fois par l'électrolyse de la vapeur d'eau et de l'autre gaz, dans les cinquièmes lumières.

L'invention concerne également un procédé de fonctionnement d'un réacteur d'électrolyse décrit précédemment, selon lequel :

- on alimente les deuxièmes lumières en vapeur d'eau et simultanément les premières lumières en un autre gaz à électrolyser choisi parmi le dioxyde de carbone CO2 et le dioxyde d'azote N02,
- on récupère l'hydrogène produit par l'électrolyse de la vapeur d'eau dans les quatrièmes lumières et simultanément le monoxyde de carbone ou le monoxyde d'azote produit par l'électrolyse de l'autre gaz dans les troisièmes lumières et simultanément l'oxygène produit à la fois par l'électrolyse de la vapeur d'eau et de l'autre gaz dans les cinquièmes lumières.

Selon un mode de réalisation avantageux, on mélange en sortie du réacteur d'électrolyse l'hydrogène produit et récupéré dans les troisièmes ou alternativement quatrièmes lumières avec le monoxyde de carbone produit et récupéré dans les quatrièmes ou alternativement troisième lumières, pour produire un gaz de synthèse en vue de réaliser soit une synthèse selon le procédé Fischer-Tropsch suivi par un hydrocraquage pour produire du carburant liquide de type diesel ou kérosène, soit une synthèse de méthane, soit une synthèse de méthanol, soit une synthèse du diméthyléther (DME).

Selon un autre mode de réalisation avantageux, on mélange en sortie du réacteur d'électrolyse l'hydrogène produit et récupéré dans les troisièmes ou alternativement quatrièmes lumières avec le monoxyde d'azote produit et récupéré dans les quatrièmes ou alternativement troisièmes lumières, pour produire un gaz en vue de réaliser la synthèse de l'ammoniac NH3.

L'invention concerne également un procédé de fonctionnement d'un réacteur d'électrolyse qui vient d'être décrit, selon lequel :

- on alimente uniquement les premières ou alternativement les lumières en vapeur d'eau,
- on récupère l'hydrogène produit par l'électrolyse de la vapeur d'eau, dans les troisièmes ou alternativement quatrièmes lumières et simultanément l'oxygène produit par l'électrolyse de la vapeur d'eau, dans les cinquièmes lumières.

L'invention concerne également un procédé de fonctionnement d'un réacteur d'électrolyse qui vient d'être décrit, selon lequel :

- on alimente uniquement les premières ou alternativement les deuxièmes lumières en un autre gaz à électrolyser choisi parmi le dioxyde de carbone CO2 et le dioxyde d'azote N02,
- on récupère le monoxyde de carbone ou le monoxyde d'azote produit par l'électrolyse de l'autre gaz dans les troisièmes ou alternativement quatrièmes lumières et simultanément l'oxygène produit par l'électrolyse de l'autre gaz dans les cinquièmes lumières.

Lorsqu'on souhaite récupérer l'oxygène produit par un gaz drainant, on alimente en outre la huitième lumière de la première tôle d'extrémité, la sixième lumière de la tôle centrale et la septième lumière de la deuxième tôle d'extrémité par un gaz drainant, tel que de l'air.

Par « lumière » on entend ici et dans le cadre de l'invention, un trou débouchant de part et d'autre d'une tôle métallique.

Autrement dit, le procédé selon l'invention consiste à électrolyser la vapeur d'eau H2O et le dioxyde de carbone CO2 ou le dioxyde d'azote N02 séparément mais au sein d'un même réacteur d'électrolyse à empilement de cellules de type SOEC. Le procédé selon l'invention est mis en oeuvre avantageusement grâce à l'interconnecteur selon l'invention.

L'invention permet de conserver les avantages propres des trois grandes voies technologiques existantes pour produire un gaz de synthèse destiné à servir de combustible tout en limitant leurs inconvénients.

L'invention permet de faire varier à souhait le ratio H2/CO obtenu en sortie avant son mélange pour constituer le gaz de synthèse, et de faciliter la gestion thermique de l'empilement des cellules d'électrolyse quel que soit le mode de fonctionnement (mode endothermique ou exothermique), et ce, de manière réversible en fonction du coût du courant.

Les avantages de l'électrolyse séparée de la vapeur d'eau et du dioxyde de carbone au sein d'un même réacteur d'électrolyse, conformément à l'invention sont nombreux. Parmi ceux-ci, on peut citer:

- flexibilité du ratio H2/CO obtenu en sortie du réacteur d'électrolyse, quel que soit le mode de fonctionnement (exothermique ou endothermique),
- possibilité de mettre en oeuvre les deux électrolyses à haute température au sein d'un réacteur électrolyse de type SOEC afin d'avoir un meilleur rendement,
- mise en oeuvre d'un seul empilement, ce qui limite l'investissement,
- flexibilité du mode de fonctionnement en mode endothermique et en mode exothermique,
- couplage thermique entre les deux électrolyses, ce qui rend moins coûteux la gestion thermique de l'empilement de cellules d'électrolyse,
- possibilité d'utiliser un réacteur d'électrolyse comportant des interconnecteurs selon l'invention uniquement pour l'électrolyse de la vapeur d'eau ou uniquement pour l'électrolyse du dioxyde de carbone CO2ou d'azote N02.

Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène ou à monoxyde de carbone ou monoxyde d'azote (cathode) plus épaisse qui sert donc de support.

Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

- la figure 1 est une vue schématique montrant le principe de fonctionnement d'un électrolyseur d'eau à haute température;
- la figure 2 est une vue schématique en éclaté d'une partie d'un électrolyseur de vapeur d'eau à haute température comprenant des interconnecteurs selon l'état de l'art,
- la figure 3 est une vue schématique en coupe d'un réacteur d'électrolyse mettant en oeuvre le procédé d'électrolyse à haute température simultané de la vapeur d'eau $H_2O$ et du dioxyde de carbone $CO_2$ selon l'invention,
- la figure 4 est une vue schématique en coupe d'un réacteur d'électrolyse mettant en oeuvre le procédé d'électrolyse à haute température simultané de la vapeur d'eau $H_2O$ et du dioxyde d'azote $NO_2$ selon l'invention,
- la figure 5 est une vue en éclaté d'un interconnecteur d'un réacteur d'électrolyse selon un mode de réalisation de l'invention,
- la figure 5A est une vue de détail de la figure 5.
- la figure 5B est une vue de détail en perspective de la figure 5,
- la figure 6A est une vue en éclaté d'un interconnecteur selon l'invention destinée à être en contact avec la cathode d'une cellule d'électrolyse élémentaire d'un réacteur d'électrolyse, les figures montrant respectivement l'alimentation, la distribution et la récupération de la vapeur d'eau et de l'hydrogène produit,
- la figure 6B est une vue en éclaté d'un interconnecteur selon l'invention destinée à être en contact avec la cathode d'une cellule d'électrolyse élémentaire d'un réacteur d'électrolyse, les figures montrant respectivement l'alimentation, la distribution et la récupération du dioxyde de carbone et du monoxyde de carbone produit,
- la figure 6C est une vue en éclaté d'un interconnecteur selon l'invention destinée à être en contact avec l'anode d'une cellule d'électrolyse élémentaire d'un réacteur d'électrolyse, les figures montrant respectivement l'alimentation, la distribution et la récupération de l'air en tant que gaz drainant et de l'oxygène produit,

- les figures 7A à 7C sont des vues de face d'un interconnecteur d'un réacteur d'électrolyse selon l'invention montrant respectivement le parcours des gaz selon chacune des figures 6A à 6C,
- les figures 8 et 9 sont des vues en éclaté d'une partie d'un réacteur d'électrolyse selon l'invention avec des interconnecteurs selon l'invention et des cellules d'électrolyse de surface active différente d'une cellule à une autre adjacente,
- les figures 10A et 10B montrent des courbes représentatives de la polarisation (évolution de la tension en fonction du courant appliqué) d'une cellule d'électrolyse à cathode support (CSC) connue, à une température de 800°C, respectivement sous dioxyde de carbone CO2 en entrée et sous vapeur d'eau H2O en entrée,
- la figure 11 montre des courbes représentatives du flux de chaleur généré en fonction de la tension appliquée à une cellule d'électrolyse à cathode support (CSC) connue, pour une réaction d'électrolyse de vapeur d'eau H2O et pour une réaction d'électrolyse de dioxyde de carbone CO2,
- les figures 12A et 12B montrent des courbes représentatives du flux de chaleur total généré en fonction du rapport de surface entre deux cellules d'électrolyse à cathode support (CSC) connues et adjacentes l'une à l'autre selon la figure 7, l'une des cellules mettant en oeuvre une réaction d'électrolyse de vapeur d'eau H2O et l'autre des cellules adjacentes, une réaction d'électrolyse de dioxyde de carbone CO2,
- la figure 13 est une vue en éclaté d'un interconnecteurs d'un réacteur d'électrolyse selon un autre mode de réalisation de l'invention.

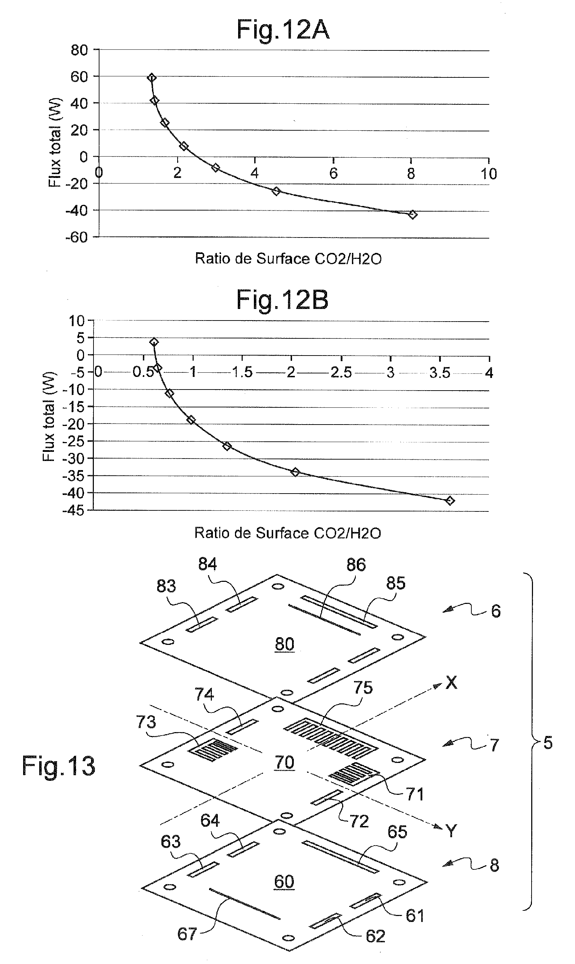

On précise ici que sur la figure 12A, la cellule d'électrolyse de l'eau H2O/H2 fonctionne en mode exothermique à une tension de 1,5V, tandis que sur la figure 12B, cette même cellule fonctionne en mode endothermique à une tension de 1.2V.

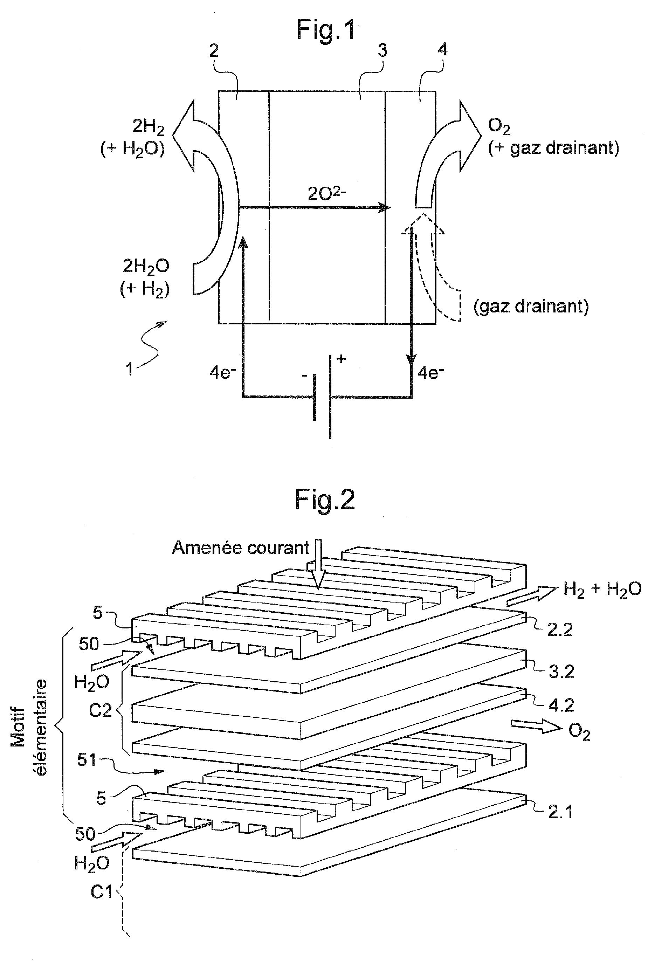

On précise également que sur l'ensemble des figures 1 à 8, les symboles et les flèches d'alimentation d'une part de vapeur d'eau H2O, de distribution et de récupération de d'hydrogène H2 et d'oxygène O2, et du courant et d'autre part de dioxyde de carbone CO2, de distribution et de récupération de monoxide de carbone CO et d'oxygène 02, et du courant sont montrés à des fins de clarté et de prévision, pour illustre le fonctionnement d'un réacteur d'électrolyse de vapeur d'eau selon l'état de l'art et d'un réacteur d'électrolyse simultanée de vapeur d'eau et de dioxyde de carbone selon l'invention.

On précise également que tous les électrolyseurs décrits sont de type à oxydes solides (SOEC, acronyme anglais de « *Solid Oxyde Electrolyte Cell* ») fonctionnant à haute température. Ainsi, tous les constituants (anode/électrolyte/cathode) d'une cellule d'électrolyse sont des céramiques. La haute température de fonctionnement d'un électrolyseur (réacteur d'électrolyse) est typiquement comprise entre 600°C et 1000°C.

Typiquement, les caractéristiques d'une cellule d'électrolyse élémentaire SOEC convenant à l'invention, du type cathode support (CSC), peuvent être celles indiquées comme suit dans le tableau 2 ci-dessous.

**TABLEAU 2**

| Cellule d'électrolyse | Unité | Valeur |
|---|---|---|
| **Cathode 2** | | |
| Matériau constitutif | | Ni-YSZ |
| Epaisseur | $\mu$m | 315 |
| Conductivité thermique | W m$^{-1}$ K$^{-1}$ | 13,1 |
| Conductivité électrique | $\Omega^{-1}$ m$^{-1}$ | $10^5$ |
| Porosité | | 0,37 |
| Perméabilité | m$^2$ | $10^{-13}$ |
| Tortuosité | | 4 |
| Densité de courant | A.m$^{-2}$ | 5300 |
| **Anode 4** | | |
| Matériau constitutif | | LSM |
| Epaisseur | $\mu$m | 20 |
| Conductivité thermique | W m$^{-1}$ K$^{-1}$ | 9,6 |
| Conductivité électrique | $\Omega^{-1}$ m$^{-1}$ | 1 $10^4$ |

(suite)

| Anode 4 | | |
|---|---|---|
| Porosité | | 0,37 |
| Perméabilité | $m^2$ | $10^{-13}$ |
| Tortuosité | | 4 |
| Densité de courant | $A.m^{-2}$ | 2000 |
| Electrolyte 3 | | |
| Matériau constitutif | | YSZ |
| Epaisseur | $\mu m$ | |
| Résistivité | Q m | 0,42 |

Un électrolyseur d'eau est un dispositif électrochimique de production d'hydrogène (et d'oxygène) sous l'effet d'un courant électrique.

Dans les électrolyseurs à haute température EHT, l'électrolyse de l'eau à haute température est réalisée à partir de vapeur d'eau. La fonction d'un électrolyseur haute température EHT est de transformer la vapeur d'eau en hydrogène et en oxygène selon la réaction suivante:

$$2H2O \rightarrow 2H2 + O2.$$

Cette réaction est réalisée par voie électrochimique dans les cellules de l'électrolyseur. Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions $O^{2-}$ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

$$2 H2O + 4e^- \rightarrow 2 H2 + 2 O^{2-}.$$

A l'anode 4, la demi-réaction est la suivante:

$$2O^{2-} \rightarrow O2 + 4 e^-.$$

L'électrolyte 3 intercalé entre les deux électrodes 2, 4 est le lieu de migration des ions $O^{2-,}$ sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H2 et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

Un fonctionnement satisfaisant d'un électrolyseur EHT nécessite :

- une bonne isolation électrique entre deux interconnecteurs adjacents dans l'empilement, sous peine de court-circuiter la cellule d'électrolyse élémentaire intercalée entre les deux interconnecteurs,
- un bon contact électrique et une surface de contact suffisante entre chaque cellule et interconnecteur, afin d'obtenir la plus faible résistance ohmique entre cellule et interconnecteurs,
- une bonne étanchéité entre les deux compartiments distincts, i.e. et cathodique, sous peine de recombinaison des gaz produits entraînant une baisse de rendement et surtout l'apparition de points chauds endommageant l'électrolyseur,
- une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2. de type à oxyde solide (SOEC) empilées alternativement avec des interconnecteurs 5 Chaque cellule C1, C2... est constituée d'une cathode 2.1, 2.2,... et d'une anode 4.1, 4.2, entre lesquelles est disposé un électrolyte 3.1, 3.2....

L'interconnecteur 5 est un composant en alliage métallique qui assure la séparation entre les compartiments cathodique 50 et anodique 51, définis par les volumes compris entre l'interconnecteur 5 et l'anode adjacente 4.2 et entre l'interconnecteur 5 et la cathode adjacente 2.1 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 51 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau par celle-ci.

L'interconnecteur 5 assure le passage du courant entre les cellules C1 et C2 par contact direct avec les électrodes adjacentes, c'est-à-dire entre l'anode 4.2 et la cathode 2.1.

Les inventeurs de la présente invention ont pensé à réaliser une électrolyse à haute température simultanée de la vapeur d'eau et d'un autre gaz choisi parmi le dioxyde de carbone et le dioxyde d'azote, au sein d'un même réacteur d'électrolyse à empilement de cellules, avec une alimentation et distribution de la vapeur d'eau à la cathode d'une des deux cellules élémentaires adjacentes et, de manière séparée, une alimentation et une distribution soit du dioxyde de carbone soit du dioxyde d'azote à la cathode de l'autre des deux cellules élémentaires.

Ainsi, le procédé d'électrolyse simultanée mais séparée de la vapeur d'eau et de l'autre gaz selon l'invention se distingue d'un procédé de co-électrolyse selon l'état de l'art (IV) selon lequel la vapeur d'eau et le dioxyde de carbone étaient mélangées en entrée d'un électrolyseur, le mélange alimentant et étant distribué dans chaque cellule d'électrolyse élémentaire.

Grâce au procédé de l'invention, on peut notamment obtenir un ratio variable entre les gaz de sortie produits H2/CO ou H2/NO, et ce quel que soit le mode de fonctionnement exothermique ou endothermique d'une cellule d'électrolyse donnée. On peut ainsi adapter à souhait ledit ratio entre les gaz de sortie produits H2/CO ou H2/NO en fonction du type de gaz de synthèse que l'on souhaite obtenir (voir tableau 1 commenté en préambule)

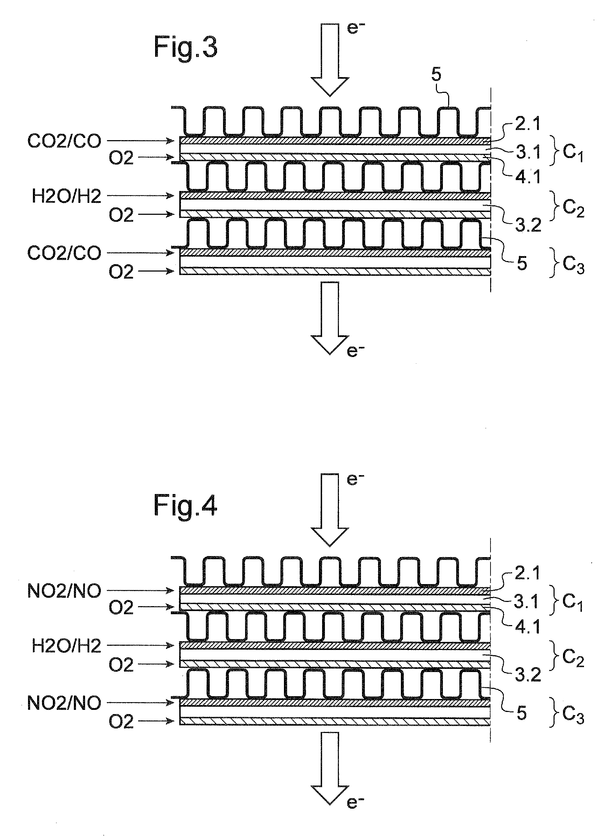

On a représenté de manière schématique en figure 3, un électrolyseur haute température à oxydes solides (SOEC) selon l'invention permettant en son sein l'électrolyse simultanée de la vapeur d'eau et du dioxyde de carbone, chaque électrolyse ayant lieu de manière séparée dans une des cellules d'électrolyse élémentaires.

Plus précisément, le procédé d'électrolyse à haute température de la vapeur d'eau $H_2O$ et du dioxyde de carbone $CO_2$ selon l'invention est mis en oeuvre par le réacteur d'électrolyse comportant un empilement de cellules d'électrolyse élémentaires de type SOEC (C1, C2, C3) formées chacune d'une cathode (2.1, 2.2, 2.3), d'une anode (4.1, 4.2, 4.3) et d'un électrolyte (3.1, 3.2, 3.3), intercalé entre la cathode et l'anode, et une pluralité d'interconnecteurs (5) électrique et fluidique agencés chacun entre deux cellules élémentaires adjacentes avec une de ses faces en contact électrique avec l'anode d'une des deux cellules élémentaires et l'autre de ses faces en contact électrique avec la cathode de l'autre des deux cellules élémentaires. Comme illustré en figure 3, on alimente et on distribue la vapeur d'eau à la cathode 2.1, 2.3 d'une (C1 ou C3) des deux cellules (C1, C2 ; C2, C3) élémentaires adjacentes et on alimente et on distribue du dioxyde de carbone à la cathode 2.2 de l'autre (C2) des deux cellules élémentaires (C1, C2 ; C2, C3).

Dans le réacteur selon l'invention, tous les compartiments cathodiques 50 dans lesquels circulent la vapeur d'eau alimentée H2O et l'hydrogène produit H2 communiquent entre eux. De même, tous les compartiments cathodiques 50 lesquels circulent le dioxyde de carbone injecté CO2 et le monoxyde de carbone produit CO communiquent entre eux, mais sont complètement isolés des compartiments 50 dédié à la vapeur d'eau H2O et à l'hydrogène produit H2. Enfin, les deux réactions d'électrolyse simultanées mais séparés produisent toutes deux de l'oxygène qui est récolté par tous les compartiments anodiques 51 qui communiquent entre eux, quelle que soit la réaction concernée.

Ainsi, selon l'invention, on alimente et on distribue la vapeur d'eau produisant l'hydrogène dans des compartiments cathodiques séparés de ceux dans lesquels on alimente le dioxyde de carbone CO2 produisant le monoxyde de carbone et on récupère tout l'oxygène produit par les deux réactions d'électrolyse dans des compartiments anodiques.

Au lieu de réaliser l'électrolyse du dioxyde de carbone, on peut conformément à l'invention, réaliser l'électrolyse du dioxyde d'azote pour produire un gaz H2 +NO en sortie du réacteur d'électrolyse un gaz destiné à la production d'ammoniac. Un tel procédé mis en oeuvre de la même manière que pour les électrolyses simultanées mais séparées de la vapeur d'eau et du dioxyde de carbone, est illustré schématiquement en figure 4.

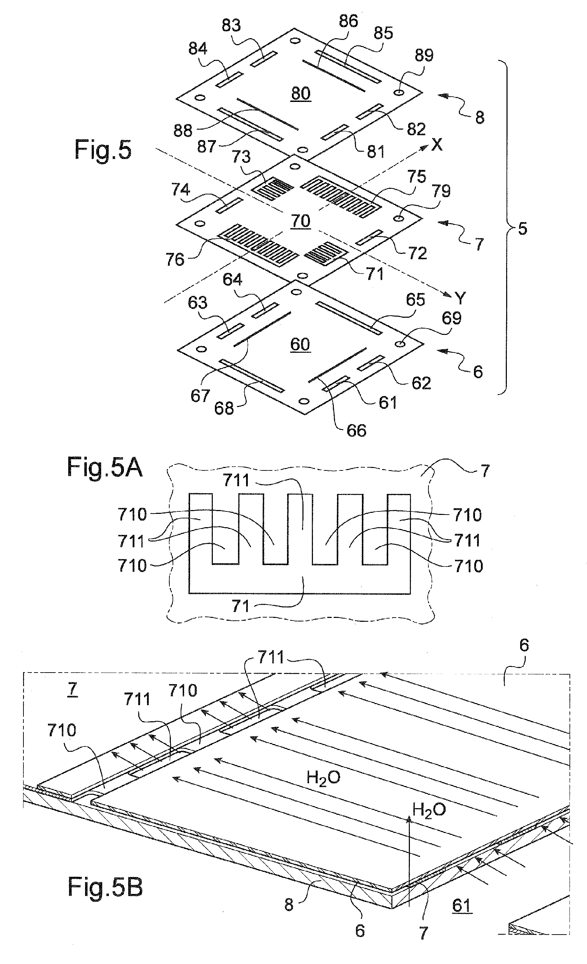

La figure 5 montre en éclaté un interconnecteur 5 selon l'invention permettant s'assurer l'alimentation simultanée de vapeur d'eau H2O et du dioxyde de carbone CO2 ainsi que la récupération respectivement de l'oxygène O2, du monoxyde de carbone CO et de l'oxygène O2 produits au sein de l'empilement d'un réacteur d'électrolyse. Comme détaillé par la suite, l'interconnecteur 5 permet d'assurer une circulation du gaz (H2O/H2 ou CO2/CO) aux cathodes des cellules à courant croisé à 90° avec la circulation du gaz récupéré (O2, le cas échéant avec du gaz drainant) aux anodes des cellules.

L'interconnecteur 5 est constitué de trois tôles planes 6, 7, 8 allongées selon deux axes de symétrie (X, Y) orthogonaux entre eux, les tôles planes étant stratifiées et assemblées entre elles par soudure. Une tôle centrale 7 est intercalée entre une première 6 et une deuxième 8 tôle d'extrémité.

La première 6 tôle d'extrémité est destinée à venir en contact mécanique avec le plan d'une cathode 2.2 d'une cellule (C2) d'électrolyse élémentaire et la deuxième tôle 8 d'extrémité est destinée à venir en contact mécanique avec le plan d'une anode 4.1 d'une cellule (C1) d'électrolyse élémentaire adjacente, chacune des deux cellules d'électrolyse élémentaires adjacentes (C1, C2) de type SOEC étant formée d'une cathode 2.1, 2.2, d'une anode 4.1, 4.2 et d'un électrolyte 3.1, 3.2 intercalé entre la cathode et l'anode.

On décrit maintenant en référence à la figure 5 le mode de réalisation des tôles 6, 7, 8 de l'interconnecteur 5 dédié à l'électrolyse de la vapeur d'eau et leur assemblage pour mettre en oeuvre le procédé d'électrolyse simultanée selon l'invention.

Chacune des trois tôles planes 6, 7, 8 comporte une partie centrale 60, 70, 80 non percée et est percée, à la périphérie de sa partie centrale, d'au moins cinq lumières 61, 62, 63, 64, 65 ; 71, 72, 73, 74, 75 ; 81, 82, 83, 84, 85.

Les premières 61, 71, 81 à quatrième 64, 74, 84 lumières de chaque tôle sont allongées sur une longueur correspondant à une partie de la longueur de la partie centrale 60, 70, 80 selon l'un des axes X des tôles et sont réparties deux à deux de part et d'autre dudit axe X.

La cinquième 65, 75, 85 lumière est allongée sur une longueur correspondant sensiblement à la longueur de la partie centrale 60, 70, 80 selon l'autre des axes Y.

La première 6 tôle d'extrémité comporte en outre une sixième 66 et septième 67 lumières agencées symétriquement de part et d'autre de l'axe X, à l'intérieur de ses premières à quatrième lumières 61 à 64, et sont allongées sur une longueur correspondant sensiblement à la longueur de la partie centrale selon l'axe X.

La deuxième 8 tôle d'extrémité comporte en outre une sixième 86 lumière à l'intérieur de sa cinquième 85 lumière, et allongée sur une longueur correspondant sensiblement la longueur de la partie centrale selon ledit axe Y.

Comme visible sur la figure 5, les première 71, troisième 73, et cinquième 75 lumières de la tôle centrale 7 sont élargies par rapport respectivement aux première 61, 81, troisième 63, 83 et cinquième 65, 85 lumières de chaque tôle d'extrémité 6, 8.

Les deuxièmes 62, 72, 82 et quatrième 64, 74, 84 lumières des trois tôles sont de dimensions sensiblement identiques entre elles.

Toutes les lumières élargies 71, 73, 75, 76 de la tôle centrale 7 comportent dans leur partie élargie, des languettes de tôles 710 espacées les unes des autres en formant un peigne. Comme illustré en figures 5A et 5B, chacune des fentes 711 définie entre le bord d'une fente élargie 71 et une languette 710 ou entre deux languettes consécutives débouchant sur une 66 des lumières intérieures de la première 6 tôle d'extrémité. Il en va de même pour la fente élargie 73. Pour chacune des fentes élargies 75, 76, les fentes entre languettes de tôle ainsi définies débouchent sur une des lumières 85, 86 de la deuxième tôle d'extrémité.

La stratification et l'assemblage des trois tôles 6, 7, 8 entre elles sont réalisées telles que :

- les languettes de tôles forment des entretoises d'espacement entre première 6 et deuxième 8 tôles d'extrémité respectivement entre les première 61 et sixième 66 lumières de la première tôle d'extrémité 6, entre les troisième 63 et septième 67 lumières de la première tôle d'extrémité 6, et entre les cinquième 85 et sixième 86 lumières de la deuxième tôles d'extrémité 8,
- chacune des première à cinquième 61 à 65 lumières de l'une des trois tôles est en communication fluidique individuellement respectivement avec l'une des première à cinquième 71 à 75 et 81 à 85 lumières correspondantes des deux autres tôles 7, 8.
- la première 61 lumière de la première 6 tôle d'extrémité est en communication fluidique avec la sixième 66 lumière de la première 6 tôle d'extrémité par le biais de la première 71 lumière de la tôle centrale 7,
- la troisième 63 lumière de la première 6 tôle d'extrémité est en communication fluidique avec la septième 67 lumière de la première 6 tôle d'extrémité par le biais de la troisième 73 lumière de la tôle centrale 7,
- la cinquième 85 et la sixième 86 lumières de la deuxième 8 tôle d'extrémité sont en communication fluidique par le biais de la cinquième 75 lumière de la tôle centrale 7.

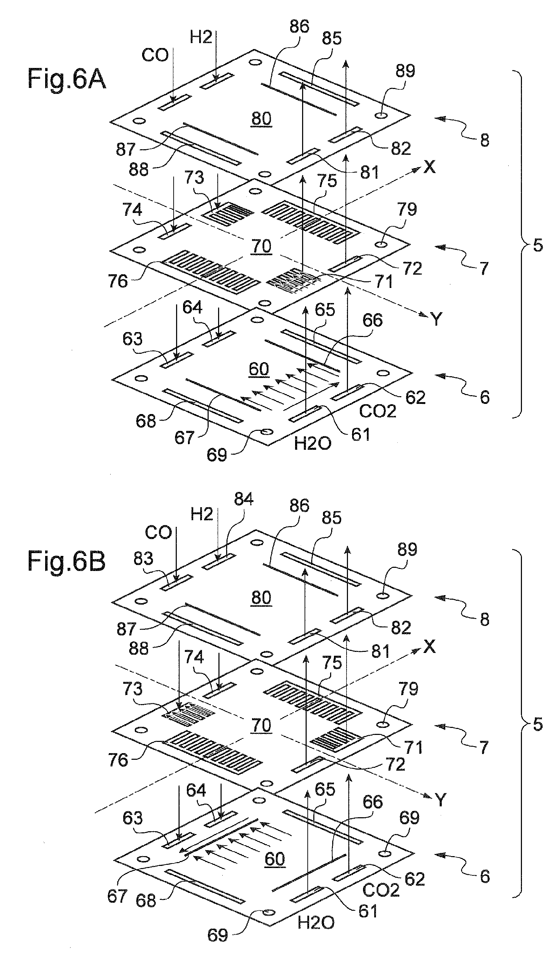

Les figures 5A et 5B montrent en détail la réalisation du peigne formé par les languettes de tôle 710 au niveau de la fente élargie 71 de la tôle centrale et son agencement entre les deux tôles d'extrémité 6, 8 afin de permettre l'alimentation d'une cellule d'électrolyse, ici en vapeur d'eau H2O. Ainsi, le peigne formé 710, 711 permet à la vapeur d'eau de passer de la clarinette d'alimentation 61, 71, 81 à la fente de distribution 66 en passant dans l'espace entre les deux tôles d'extrémité 6, 8. L'épaisseur de la tôle 7 centrale au niveau de ce peigne 710, 711 lui confère une fonction d'entretoise et garantit ainsi la hauteur du passage pour la vapeur d'eau dans l'espace inter-tôles d'extrémité 6, 8. Un tel passage des gaz selon l'invention par l'intérieur de l'interconnecteur 5 a pour avantage de libérer une surface plane pour la réalisation des étanchéités. En outre, on obtient grâce à ces formes de peignes pour les fentes élargies 71, 75 une distribution homogène de chaque gaz (H2O, CO2, Air) sur la cellule d'électrolyse, et grâce à ces formes de peigne pour les fentes élargies 73, 76 une récupération du gaz produit (H2, CO, O2). Ces distributions ou récupérations homogènes ou autrement dit uniformes en débit est montrée sur les figures 6A à 7C, sous la forme de petites flèches espacées les unes des autres.

L'interconnecteur 5 représenté en figure 5 est dédié à l'électrolyse de la vapeur d'eau comme précisé ci-après. Pour constituer un interconnecteur 5 avec les mêmes trois tôles planes 6, 7, 8 mais dédié à l'électrolyse du dioxyde de carbone CO2, on utilise les mêmes trois tôles 6, 7, 8 qui viennent d'être décrites et la tôle centrale 7 est retournée dessus-dessous, puis la stratification et l'assemblage des trois tôles 6, 7, 8 entre elles sont réalisées telles que:

- chacune des première à cinquième 61 à 65 lumières de l'une des trois tôles est en communication fluidique individuellement respectivement avec l'une des première à cinquième 71 à 75 et 81 à 85 lumières correspondantes des deux autres tôles 7, 8.
- la deuxième 62 lumière de la première 6 tôle d'extrémité est en communication fluidique avec la sixième 66 lumière de la première 6 tôle d'extrémité par le biais de la première 71 lumière de la tôle centrale 7,
- la quatrième 64 lumière de la première 6 tôle d'extrémité est en communication fluidique avec la septième 67 lumière de la première 6 tôle d'extrémité par le biais de la troisième 73 lumière de la tôle centrale 7,
- la cinquième 85 et la sixième 86 lumières de la deuxième 8 tôle d'extrémité sont en communication fluidique par le biais de la cinquième 75 lumière de la tôle centrale 7.

Selon un mode de réalisation avantageux, lorsqu'on souhaite alimenter les anodes par un gaz drainant pour évacuer l'oxygène collecté, on réalise des lumières supplémentaires dans les tôles 6, 7, 8.
Ainsi, selon ce mode avantageux :

- la première 6 tôle d'extrémité comporte en outre une huitième 68 lumière allongée sur une longueur correspondant sensiblement à la longueur de la partie centrale selon l'autre des axes Y et agencée à l'opposé de sa cinquième 65 lumière par rapport à l'axe Y,
- la deuxième 8 tôle d'extrémité comporte en outre une septième 87 lumière allongée sur une longueur correspondant sensiblement à la longueur de la partie centrale selon l'autre des axes Y et agencée à l'opposé de sa cinquième 85 lumière par rapport à l'axe Y, et une huitième 88 lumière allongée sur une longueur correspondant sensiblement la longueur de la partie centrale selon ledit axe Y, et agencée à l'opposé de sa sixième 86 lumière par rapport à l'axe Y,

- la tôle centrale 7 comporte en outre une sixième 76 lumière élargie par rapport à la huitième 68 de la première 6 tôle d'extrémité et à la septième 87 lumière de la deuxième 8 tôle d'extrémité,
- les trois tôles sont assemblées entre elles telles que la septième 87 et la huitième 88 lumières allongées selon l'axe Y de la deuxième 8 tôle d'extrémité sont en communication fluidique par le biais de la sixième 76 lumière de la tôle centrale 7.

Ce mode de réalisation pour récupérer de l'oxygène avec un gaz drainant est en outre avantageux car il permet de n'avoir qu'un seul type de tôles à fabriquer à la fois pour réaliser un interconnecteur 5 dédié à l'électrolyse de la vapeur d'eau et à l'électrolyse du dioxyde de carbone. En effet, en fonction du gaz à électrolyser au niveau d'une cellule d'électrolyse donnée, la tôle centrale 7 doit être placée dans un sens ou dans un autre, c'est-dire selon un retournement dessus-dessous, entre les deux tôles 6, 8 d'extrémité pour être assemblée afin de constituer soit un interconnecteur 5 dédié à l'électrolyse de la vapeur d'eau H2O, soit un interconnecteur 5 dédié à l'électrolyse du CO2. Ainsi, en fonction du sens de retournement de la tôle centrale 7, ses lumières élargies 71, 73 se retrouvent en regard des lumières 61, 63 et 81, 83 ou en regard des lumières 62, 82 et 64, 84.

Dans un réacteur d'électrolyse à empilement de cellules d'électrolyse élémentaires de type SOEC selon l'invention, l'empilement de la pluralité d'interconnecteurs 5 agencés chacun entre deux cellules élémentaires adjacentes est réalisé avec la première 6 tôle d'extrémité en contact électrique avec la cathode de l'une des deux cellules élémentaires et la deuxième 8 tôle d'extrémité en contact électrique avec l'anode de l'autre des deux cellules élémentaires. L'ensemble des cellules d'électrolyse est alimenté en série par le courant électrique et en parallèle par les gaz. La nature des matériaux permettant les réactions d'électrolyse simultanées de la vapeur d'eau et du dioxyde de carbone, des cellules de même nature de type oxydes solides sont empilées.

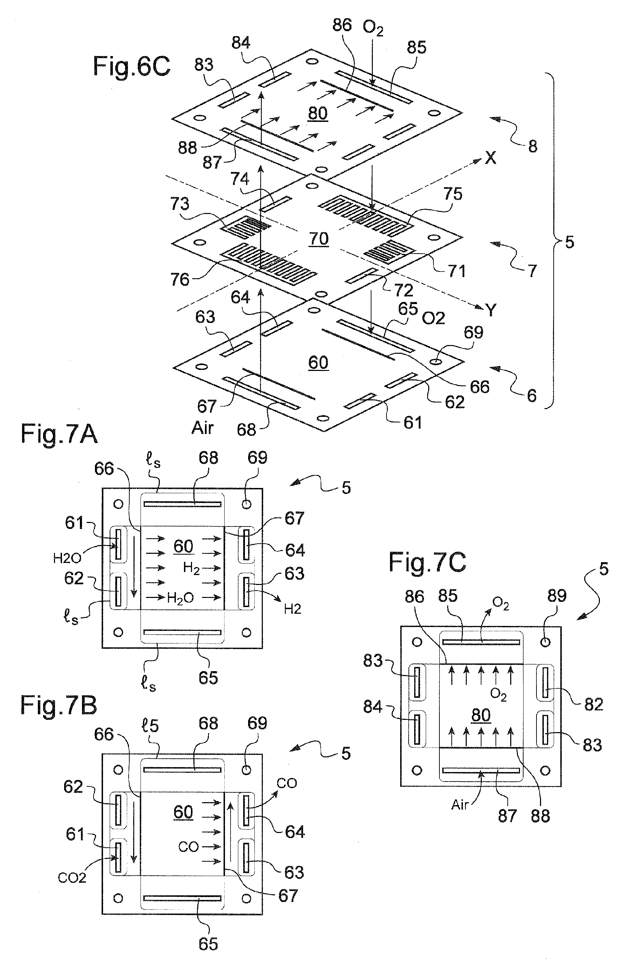

Pour l'interconnecteur 5 dédié à l'électrolyse de l'eau, la communication fluidique est réalisée entre d'une part la première 61 et la sixième 66 lumières de la première 6 tôle d'extrémité et d'autre part la troisième 63 et la septième 67 lumières de la première 6 tôle d'extrémité (figures 6A et 7A).

Pour un interconnecteur 5 adjacent, dédié à l'électrolyse du dioxyde de carbone, la communication fluidique est réalisée entre d'une part la deuxième 62 et la sixième 66 lumières de la première tôle 6 d'extrémité et d'autre part la quatrième 64 et la septième 67 lumières de la première 6 tôle d'extrémité (figures 6B et 7B).

Ainsi, dans un interconnecteur 5 selon l'invention, il y a deux catégories de lumières:

- une première catégorie de lumières; destinées soit à alimenter soit à récupérer l'ensemble de l'empilement de cellules d'électrolyse d'eau et de CO2, et qui forment une partie des tubes traversant l'ensemble des interconnecteurs 5 dénommés usuellement des clarinettes d'entrée ou de sortie ;
- une deuxième catégorie de lumières destinées soit à distribuer chaque gaz d'alimentation ou drainant sur chaque cellule d'électrolyse à partir de d'une clarinette, soit à récupérer les gaz produits à chaque cellule d'électrolyse

Ainsi, dans la première catégorie, les lumières 61, 81 ; 62,72, 82 ; 64, 74, 84 ; 65, 85 ; forment une partie de clarinette d'alimentation en gaz (H2O, CO2 ou Air) tandis que les lumières 63, 83 ; 68, 87 forment une partie de clarinette de récupération de gaz produit (H2, CO ou 02).

Dans la deuxième catégorie, les lumières 66, 71 ; 75, 86 forment des lumières de distribution de gaz d'alimentation ou de gaz drainant (H2O, CO2, Air) sur une cellule d'électrolyse, tandis que les lumières 67, 73 ; 76, 88 forment des lumières de récupération des gaz produits sur une cellule.

Les trois tôles planes 6, 7, 8 constituant un interconnecteur 5 selon l'invention sont des tôles minces métalliques planes, percées et assemblées entre elles par soudures. De préférence, les tôles minces sont des tôles d'épaisseur inférieure à 3mm, typiquement de l'ordre de 0,2 mm. Toutes les soudures entre tôles réalisées à la fabrication, en dehors de tout fonctionnement de l'électrolyseur peuvent être réalisées avantageusement selon une technique de laser par transparence, ce qui est possible du fait de la faible épaisseur des tôles minces, typiquement de l'ordre de 0,2 mm.

Toutes les tôles sont avantageusement en acier ferritique avec de l'ordre de 20% de chrome, de préférence en CROFER® 22APU ou le FT18TNb, à base Nickel de type Inconel® 600 ou Haynes® dans des épaisseurs typiquement comprises entre 0,1 et 1 mm.

L'assemblage par lignes de soudures 1s autour des lumières entre tôles planes 6, 7, 8 garantit une bonne étanchéité entre la vapeur d'eau amenée H20/ le dioxyde de carbone CO2 et l'hydrogène H2/le monoxyde de carbone CO produit et récupéré, lors du fonctionnement de l'électrolyseur.

Tel qu'illustré sur l'ensemble des figures 3 à 9, les trois tôles 6, 7, 8 sont percées à leur périphérie de lumières supplémentaires 69, 79, 89 adaptées pour loger des tirants de fixation. Ces tirants de fixation permettent d'appliquer une force de maintien à l'empilement des différents composants du réacteur d'électrolyse.

On décrit maintenant en référence aux figures 6A à 7C, le procédé de fonctionnement d'un réacteur d'électrolyse selon l'invention tel qu'il vient d'être décrit:

- on alimente les premières 61, 71, 81 lumières en vapeur d'eau et simultanément les deuxièmes 62, 72, 82 lumières en dioxyde de carbone CO2,
- on alimente la huitième 68 lumière de la première tôle d'extrémité 6, la sixième 76 lumière de la tôle centrale 7 et la septième 87 lumière de la deuxième tôle d'extrémité 8 par un gaz drainant, tel que de l'air.
- on récupère l'hydrogène produit par l'électrolyse de la vapeur d'eau, dans les troisièmes 63, 73, 83 lumières et simultanément le monoxyde de carbone produit par l'électrolyse de l'autre gaz dans les quatrièmes 64, 74, 84 lumières et simultanément l'oxygène avec son gaz drainant produit à la fois par l'électrolyse de la vapeur d'eau et du monoxyde de carbone CO, dans les cinquièmes 65, 75, 85 lumières.

Le parcours de la vapeur d'eau injectée et de l'hydrogène produit au sein d'un interconnecteur 5 est schématisé en figures 6A et 7A.

Le parcours du dioxyde de carbone CO2 injecté et du monoxyde de carbone produit au sein d'un interconnecteur 5 est schématisé en figures 6B et 7B.

Le parcours de l'air en tant que gaz drainant injecté et de l'oxygène produit au sein d'un interconnecteur 5 est schématisé en figures 6C et 7C.

Le réacteur d'électrolyse selon l'invention à empilement de plusieurs interconnecteurs 5 qui vient d'être décrit permet de coupler sans mélange de gaz, la thermique des deux réactions d'électrolyse, i.e. celle de la vapeur d'eau et celle du dioxyde de carbone.

Ainsi, on peut gérer la thermique de la réaction d'électrolyse H2O/H2 en faisant varier la résistance des cellules d'électrolyse dédiée à l'autre réaction, i.e. la réaction d'électrolyse CO2/CO. Lorsque les cellules d'électrolyse élémentaires sont de type à cathode support (CSC), on peut d'envisager la seule variation de la surface de l'électrode à oxygène, faisant ainsi varier la surface active des cellules d'électrolyse CO2/CO, sans modifier aucun autre composant de l'empilement au sein du réacteur. D'autres variantes peuvent être envisagées pour faire varier la résistance des cellules destinées à la réaction d'électrolyse CO2/CO parmi lesquelles :

- dimension du contact électrique,
- diminution de l'épaisseur de l'électrolyte,
- variation du taux d'utilisation du gaz d'entrée CO2,
- variation de la température d'entrée du gaz CO2.

Avec le réacteur d'électrolyse selon l'invention et des surfaces actives de cellules d'électrolyse H2O/H2 différentes de celles des cellules d'électrolyse CO2/CO, il est possible de passer d'un mode de fonctionnement endothermique ou exothermique pour la réaction d'électrolyse H2O/H2 uniquement en inversant les alimentations en H2O et CO2 ce qui permet d'alimenter au choix les plus petites ou les plus grandes cellules d'électrolyse.

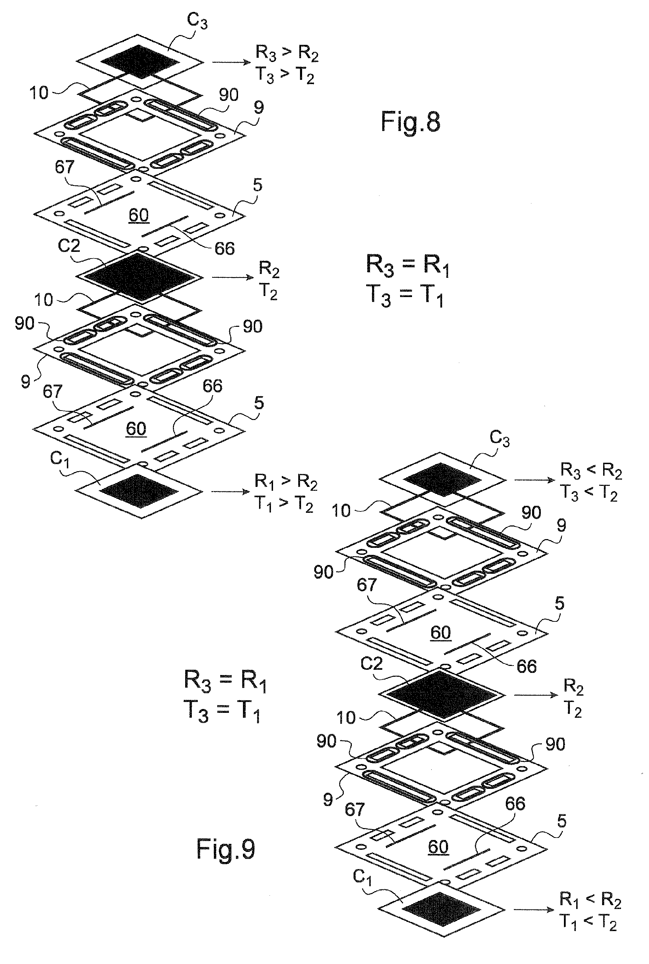

Les figures 8 et 9 illustrent en éclaté une partie des réacteurs d'électrolyse selon l'invention avec des cellules d'électrolyse de surface différente selon qu'elles sont dédiées à l'électrolyse de l'eau ou de la vapeur d'eau. On précise ici que sur ces figures sont représentées en outre des cadres d'étanchéité 9 percés leurs lumières 99 adaptées pour loger des tirants de fixation de l'empilement, ainsi que des joints 90 prévus pour réaliser l'étanchéité autour des lumières d'alimentation des gaz H2O, CO2, Air et de récupération des gaz produits H2, CO, O2 avec Air. Des joints 10 prévus à la périphérie des anodes 4 pour assurer l'étanchéité de l'oxygène produit sont en outre représentés. L'ensemble des cellules d'électrolyse C1 à C3 sont traversées par le même courant électrique.

La figure 8 illustre une variante selon laquelle les cellules d'électrolyse C1, C3 identiques entre elles et dédiées à l'électrolyse du dioxyde de carbone présentent une surface active inférieure à la cellule d'électrolyse C2 dédiée à l'électrolyse de la vapeur d'eau, la cellule C2 étant intercalée entre les deux cellules C1, C3. Avec une telle configuration, il est possible de gérer l'endothermicité de la réaction d'électrolyse H2O/H2 dans la cellule C2 en dessous de 1.3V en forçant l'exothermicité de la réaction d'électrolyse CO2/CO.

A l'inverse de la figure 8, la figure 9 illustre une variante selon les cellules d'électrolyse C1, C3 identiques entre elles et dédiées à l'électrolyse du dioxyde de carbone présentent une surface active supérieure à la cellule d'électrolyse C2 dédiée à l'électrolyse de la vapeur d'eau, la cellule C2 étant intercalée entre les deux cellules C1, C3. Avec une telle configuration, on peut obtenir un fonctionnement exothermique de la réaction d'électrolyse H2O/H2 au-dessus de 1.3V en forçant l'endothermicité de la réaction d'électrolyse CO2/CO.

Le rapport de surface entre les cellules C1, C3 et la cellule C2 que l'on souhaite obtenir dépend du point de fonctionnement et du type de ces cellules.

Ainsi, selon l'invention, on peut définir un régime de fonctionnement en mode exothermique pour l'électrolyse de la vapeur d'eau à la cathode d'une des deux cellules élémentaires adjacentes et simultanément on réalise un régime de fonctionnement en mode endothermique pour l'électrolyse du dioxyde de carbone ou dioxyde d'azote à la cathode de l'autre des deux cellules élémentaires adjacentes, la chaleur dégagée par l'électrolyse de la vapeur d'eau étant apte à apporter au moins en partie la chaleur requise par l'électrolyse du dioxyde de carbone ou du dioxyde d'azote.

De manière alternative, on peut définir un régime de fonctionnement en mode exothermique pour l'électrolyse du dioxyde de carbone ou dioxyde d'azote à la cathode à la cathode d'une des deux cellules élémentaires adjacentes et simultanément on réalise un régime de fonctionnement en mode endothermique pour l'électrolyse de la vapeur d'eau de l'autre des deux cellules élémentaires adjacentes, la chaleur dégagée par l'électrolyse du dioxyde de carbone ou dioxyde d'azote étant apte à apporter au moins en partie la chaleur requise par l'électrolyse de la vapeur d'eau.

Pour valider la variation du rapport de surface entre cellules d'électrolyse, des simulations ont été effectuées à l'aide d'un modèle du laboratoire, sur des cellules cathode-support commerciales définies dans le tableau 2 ci-avant. Ce modèle de simulation de laboratoire a été décrit dans la publication [1].

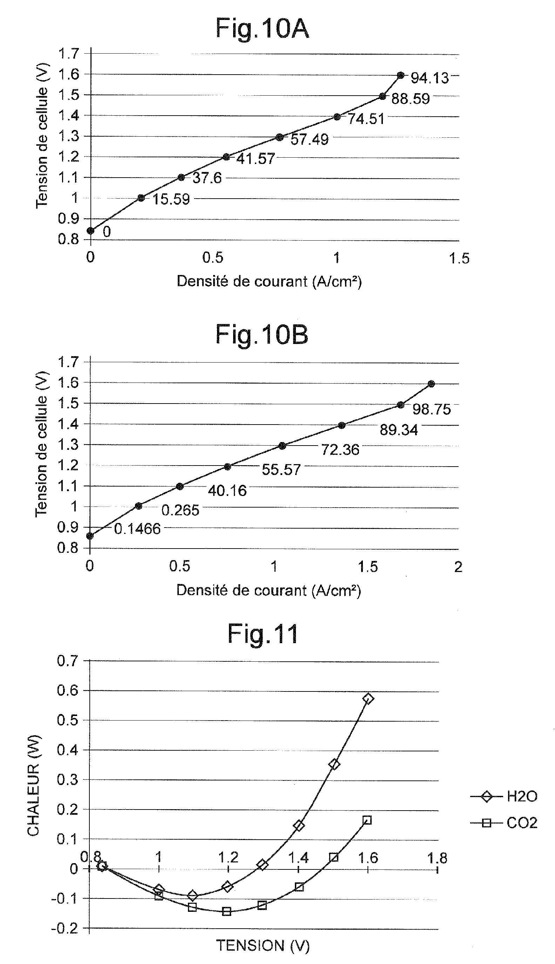

Les figures 10A et 10B illustrent les courbes de polarisation obtenues respectivement en électrolyse du dioxyde de carbone et de l'eau. On précise que la cellule d'électrolyse à cathode support sur laquelle les simulations ont été faites, est à une température de 800°C. On précise également que le ratio CO2/CO en entrée de la cellule était de 90/10 (figure 10A), tout comme le ratio H2O/H2 en entrée de la cellule (figure 10B).

Les flux de chaleur des deux réactions d'électrolyse ont été également calculés en fonction de la polarisation des cellules et sont illustrés en figure 11.

Sur la base des résultats obtenus, les flux de chaleur nets correspondant à la somme des termes relatifs à l'électrolyse de l'eau et du CO2 ont été calculés pour deux modes de fonctionnement de la cellule alimentée par de la vapeur d'eau et dont la surface a été fixée à 100 cm$^2$. Le premier mode de fonctionnement correspond à un mode exothermique sous une tension de 1,5 volts tandis que le second mode correspond à un mode endothermique à 1,2 volts.

Les flux de chaleur W calculés pour les premier et deuxième modes en fonction du rapport des surfaces entre cellules alimentées respectivement en CO2 et H2O sont présentés respectivement en figures 12A et 12B.

De la figure 12A, on déduit que pour assurer un fonctionnement autotherme de l'ensemble du réacteur d'électrolyse à empilement, il faut un rapport de surface entre cellules d'électrolyse C1, C2 d'environ 2,5 lorsque la cellule d'électrolyse sous eau C2 fonctionne en mode exothermique à 1,5 volts.

Ce rapport de surface requis entre cellules d'électrolyse C1, C2 diminue à 0,6 lorsque la cellule C2 fonctionne en mode endothermique à 1,2 volts (figure 12B).

L'invention n'est pas limitée aux exemples qui viennent d'être décrits ; on peut notamment combiner entre elles des caractéristiques des exemples illustrés au sein de variantes non illustrées.

Ainsi, dans le mode de réalisation représenté en figure 13, où il n'est pas prévu d'alimentation d'un gaz drainant pour la récupération de l'oxygène produit, c'est-à-dire un mode selon lequel les tôles 6, 7, 8 n'ont pas à être percées respectivement des lumières 68, 76, 87 et 88, il faut, en plus du retournement dessus-dessous de la tôle centrale 7, réaliser les lumières 65, 75, 85, 86 de récupération de l'oxygène produit à l'opposé de celles montrées en figure 5, par rapport à l'axe Y.

Par ailleurs, bien qu'un réacteur d'électrolyse avec une pluralité d'interconnecteurs 5 selon l'invention est prévu pour mettre en oeuvre le procédé d'électrolyse simultanée et séparée de la vapeur d'eau et du dioxyde de carbone selon l'invention, on peut tout aussi bien l'utiliser soit uniquement pour une électrolyse de la vapeur d'eau soit uniquement pour une électrolyse du dioxyde de carbone.

Pour réaliser uniquement une électrolyse de l'eau, on réalise le procédé de fonctionnement du réacteur de la manière suivante :

- on alimente uniquement les premières 61, 71, 81 ou alternativement les deuxièmes 62, 72, 82 lumières en vapeur d'eau,
- on récupère l'hydrogène produit par l'électrolyse de la vapeur d'eau, dans les troisièmes 63, 73, 83 ou alternativement quatrièmes 64, 74, 84 lumières et simultanément l'oxygène produit par l'électrolyse de la vapeur d'eau, dans les cinquièmes 65, 75, 85 lumières.

Pour réaliser uniquement une électrolyse du dioxyde de carbone, on réalise le procédé de fonctionnement du réacteur de la manière suivante :

- on alimente uniquement les premières 61, 71, 81 ou alternativement les deuxièmes 62, 72, 82 lumières en dioxyde de carbone CO2,
- on récupère le monoxyde de carbone produit par l'électrolyse de l'autre gaz dans les troisièmes 63, 73, 83 ou alternativement quatrièmes 64, 74, 84 lumières et simultanément l'oxygène produit par l'électrolyse de l'autre gaz dans les cinquièmes 65, 75, 85 lumières.

## Référence citée

[1] : J. Laurencin et al, « Modelling of solide steam électrolyser : Impact of the operating conditions on hydrogen productions », Journal of Power Source 196 (2011) 2080-2093

## Revendications

1. Procédé d'électrolyse à haute température de la vapeur d'eau $H_2O$ et d'un autre gaz à électrolyser choisi parmi le dioxyde de carbone $CO_2$ et le dioxyde d'azote $NO_2$, mis en oeuvre dans un réacteur d'électrolyse comportant un empilement de cellules d'électrolyse élémentaires (C1, C2, C3) de type SOEC formées chacune d'une cathode (2.1, 2.2, ...), d'une anode (4.1, 4.2, ...) et d'un électrolyte (3.1, 3.2...) intercalé entre la cathode et l'anode, et une pluralité d'interconnecteurs (5) électrique et fluidique agencés chacun entre deux cellules élémentaires (C1, C2) adjacentes avec une de ses faces en contact électrique avec l'anode (4.1) d'une (C1) des deux cellules élémentaires et l'autre de ses faces en contact électrique avec la cathode (2.2) de l'autre des deux cellules (C2) élémentaires, selon lequel on alimente et on distribue la vapeur d'eau à la cathode d'une des deux cellules élémentaires adjacentes et on alimente et on distribue soit du dioxyde de carbone soit du dioxyde d'azote à la cathode de l'autre des deux cellules élémentaires.

2. Procédé d'électrolyse selon la revendication 1, selon lequel on définit un régime de fonctionnement en mode exothermique pour l'électrolyse de la vapeur d'eau la cathode d'une des deux cellules élémentaires adjacentes et simultanément on réalise un régime de fonctionnement en mode endothermique pour l'électrolyse du dioxyde de carbone ou dioxyde d'azote à la cathode de l'autre des deux cellules élémentaires adjacentes, la chaleur dégagée par l'électrolyse de la vapeur d'eau étant apte à apporter au moins en partie la chaleur requise par l'électrolyse du dioxyde de carbone ou du dioxyde d'azote.

3. Procédé d'électrolyse selon la revendication 1, selon lequel on définit un régime de fonctionnement en mode exothermique pour l'électrolyse du dioxyde de carbone ou dioxyde d'azote à la cathode d'une des deux cellules élémentaires adjacentes et simultanément on réalise un régime de fonctionnement en mode endothermique pour l'électrolyse de la vapeur d'eau de l'autre des deux cellules élémentaires adjacentes, la chaleur dégagée par l'électrolyse du dioxyde de carbone ou dioxyde d'azote étant apte à apporter au moins en partie la chaleur requise par l'électrolyse de la vapeur d'eau.

4. Dispositif (5) formant un interconnecteur électrique et fluidique pour l'électrolyse à haute température de la vapeur d'eau et d'un autre gaz à électrolyser choisi parmi le dioxyde de carbone $CO_2$ et le dioxyde d'azote $NO_2$, le dispositif consistant en trois tôles planes (6, 7, 8), allongées selon deux axes de symétrie (X, Y) orthogonaux entre eux, l'une des tôles d'extrémité étant destinée à venir en contact mécanique avec le plan d'une cathode (2) d'une cellule (C2) d'électrolyse élémentaire et l'autre des tôles d'extrémité étant destinée à venir en contact mécanique avec le plan d'une anode (4) d'une cellule (C1) d'électrolyse élémentaire adjacente, chacune des deux cellules d'électrolyse élémentaires adjacentes de type SOEC étant formée d'une cathode (2), d'une anode (4), et d'un électrolyte (3) intercalé entre la cathode et l'anode, dispositif dans lequel

- chacune des trois tôles planes (6, 7, 8) comporte une partie centrale (60, 70, 80) non percée et est percée, à la périphérie de sa partie centrale, d'au moins cinq lumières (61, 62, 63, 64, 65 ; 71, 72, 73, 74, 75 ; 81, 82, 83, 84, 85), les premières à quatrième lumières (61 à 64 ; 71 à 74 ; 81 à 84) de chaque tôle étant allongées sur une longueur correspondant à une partie de la longueur de la partie centrale selon l'un des axes X des tôles et étant réparties deux à deux de part et d'autre dudit axe X, tandis que la cinquième (65, 75, 85) lumière est allongée sur une longueur correspondant sensiblement à la longueur de la partie centrale selon l'autre des axes Y,
- une (6) des tôles d'extrémité, dite première tôle d'extrémité, comporte en outre une sixième (66) et septième (67) lumières agencées symétriquement de part et d'autre de l'axe X, à l'intérieur de ses premières à quatrième lumières (61, 62, 63, 64), et sont allongées sur une longueur correspondant sensiblement à la longueur de la partie centrale selon l'axe X, tandis que l'autre (8) des tôles d'extrémité, dite deuxième tôle d'extrémité, comporte en outre une sixième (86) lumière à l'intérieur de sa cinquième (85) lumière, et allongée sur une longueur correspondant sensiblement la longueur de la partie centrale selon ledit axe Y, et,
- les première (71), troisième (73), et cinquième (75) lumières de la tôle centrale (7) étant élargies par rapport respectivement aux première (61, 81), troisième (63, 83) et cinquième (65, 85) lumières de chaque tôle d'extrémité, tandis que les deuxième (62, 72, 82) et quatrième (64, 74, 84) lumière des trois tôles sont de dimensions sensiblement identiques entre elles,
- toutes les lumières élargies (71, 73, 75, 76) de la tôle centrale (7) comportent dans leur partie élargie, des languettes de tôles (710) espacées les unes des autres en formant un peigne, chacune des fentes (711) définie entre le bord d'une fente élargie (71, 73, 75, 76) et une languette (710) ou entre deux languettes consécutives débouchant sur une (66) des lumières intérieures de la première (6) ou deuxième (8) tôle d'extrémité,
- les trois tôles (6, 7, 8) sont stratifiées et assemblées entre elles telles que:

• les languettes de tôles (710) forment des entretoises d'espacement entre première (6) et deuxième (8) tôles d'extrémité respectivement entre les première (61) et sixième (66) lumières de la première tôle d'extrémité (6), entre les troisième (63) et septième (67) lumières de la première tôle d'extrémité (6), et entre les cinquième (85) et sixième (86) lumières de la deuxième tôles d'extrémité (8),

- chacune des première à cinquième lumières (61 à 65) de l'une des trois tôles est en communication fluidique individuellement respectivement avec l'une des première à cinquième lumières (71 à 75 ; 81 à 85) correspondantes des deux autres tôles,
- la première (61) ou alternativement la deuxième (62) lumière de la première (6) tôle d'extrémité est en communication fluidique avec la sixième (66) lumière de la première (6) tôle d'extrémité par le biais des fentes la première (71) lumière élargie de la tôle centrale (7),
- la troisième (63) ou alternativement la quatrième (64) lumière de la première (6) tôle d'extrémité est en communication fluidique avec la septième (67) lumière de la première (6) tôle d'extrémité par le biais des fentes de la troisième (73) lumière élargie de la tôle centrale (7),
- la cinquième (85) et la sixième (86) lumières de la deuxième (8) tôle d'extrémité sont en communication fluidique par le biais des fentes de la cinquième (75) lumière élargie de la tôle centrale (7).

5. Interconnecteur électrique et fluidique selon la revendication 4, dans lequel :

- la première (6) tôle d'extrémité comporte en outre une huitième (68) lumière allongée sur une longueur correspondant sensiblement à la longueur de la partie centrale selon l'autre des axes Y et agencée à l'opposé de sa cinquième (65) lumière par rapport à l'axe Y,
- la deuxième (8) tôle d'extrémité comporte en outre une septième (87) lumière allongée sur une longueur correspondant sensiblement à la longueur de la partie centrale selon l'autre des axes Y et agencée à l'opposé de sa cinquième (85) lumière par rapport à l'axe Y, et une huitième (88) lumière allongée sur une longueur correspondant sensiblement la longueur de la partie centrale selon ledit axe Y, et agencée à l'opposé de sa sixième (86) lumière par rapport à l'axe Y,
- la tôle centrale (7) comporte en outre une sixième (76) lumière élargie par rapport à la huitième (68) de la première (6) tôle d'extrémité et à la septième (87) lumière de la deuxième (8) tôle d'extrémité,
- les trois tôles sont assemblées entre elles telles que la septième (87) et la huitième (88) lumières allongées selon l'axe Y de la deuxième (8) tôle d'extrémité sont en communication fluidique par le biais de la sixième (76) lumière de la tôle centrale (7).

6. Réacteur d'électrolyse comportant un empilement de cellules d'électrolyse (C1, C2, C3) élémentaires de type SOEC formées chacune d'une cathode (2.1, 2.2..), d'une anode (4.1, 4.2) et d'un électrolyte (3.1, 3.2) intercalé entre la cathode et l'anode, et une pluralité d'interconnecteurs (5) électrique et fluidique selon l'une des revendications 4 à 10, agencés chacun entre deux cellules élémentaires adjacentes avec la première (6) tôle d'extrémité en contact électrique avec la cathode (2.1) de l'une des deux cellules (C1) élémentaires et la deuxième (8) tôle d'extrémité en contact électrique avec l'anode (4.2) de l'autre (C2) des deux cellules élémentaires, dans lequel dans l'un de deux interconnecteurs adjacents, la communication fluidique est réalisée entre d'une part la première (61) et la sixième (66) lumières de la première (6) tôle d'extrémité et d'autre part la troisième (63) et la septième (67) lumières de la première tôle d'extrémité, tandis que dans l'autre des deux interconnecteurs adjacents, la communication fluidique est réalisée entre d'une part la deuxième (62) et la sixième (66) lumières de la première tôle d'extrémité et d'autre part la quatrième (64) et la septième (67) lumières de la première tôle d'extrémité.

7. Réacteur d'électrolyse selon la revendication 6, dans lequel la résistance électrique d'une des deux cellules élémentaires (C1) adjacentes est différente de la résistance électrique de l'autre (C2) des deux cellules élémentaires adjacentes.

8. Réacteur d'électrolyse selon la revendication 7, dans lequel la surface active d'au moins une électrode de l'une des deux cellules élémentaires adjacentes est différente de la surface active d'au moins une électrode de l'autre des cellules élémentaires adjacentes.

9. Procédé de fonctionnement d'un réacteur d'électrolyse selon l'une des revendications 6 à 8, selon lequel :

- on alimente les premières (61, 71, 81) lumières en vapeur d'eau et simultanément les deuxièmes (62, 72, 82) lumières en un autre gaz à électrolyser choisi parmi le dioxyde de carbone CO2 et le dioxyde d'azote NO2,
- on récupère l'hydrogène produit par l'électrolyse de la vapeur d'eau, dans les troisièmes (63, 73, 83) lumières et simultanément le monoxyde de carbone ou le monoxyde d'azote produit par l'électrolyse de l'autre gaz dans les quatrièmes (64, 74, 84) lumières et simultanément l'oxygène produit à la fois par l'électrolyse de la vapeur d'eau et de l'autre gaz, dans les cinquièmes (65, 75, 85) lumières.

10. Procédé de fonctionnement d'un réacteur d'électrolyse selon l'une des revendications 6 à 8, selon lequel :

- on alimente les deuxièmes (62, 72, 82) lumières en vapeur d'eau et simultanément les premières (61, 71, 81) lumières en un autre gaz à électrolyser choisi parmi le dioxyde de carbone CO2 et le dioxyde d'azote NO2,
- on récupère l'hydrogène produit par l'électrolyse de la vapeur d'eau dans les quatrièmes (64, 74, 84) lumières et simultanément le monoxyde de carbone ou le monoxyde d'azote produit par l'électrolyse de l'autre gaz dans les troisièmes (63, 73, 83) lumières et simultanément l'oxygène produit à la fois par l'électrolyse de la vapeur d'eau et de l'autre gaz dans les cinquièmes (65, 75, 85) lumières.

11. Procédé de fonctionnement selon la revendication 9 ou 10, selon lequel on mélange en sortie du réacteur d'électrolyse l'hydrogène produit et récupéré dans les troisièmes ou alternativement quatrièmes lumières avec le monoxyde de carbone produit et récupéré dans les quatrièmes ou alternativement troisième lumières, pour produire un gaz de synthèse en vue de réaliser soit une synthèse selon le procédé Fischer-Tropsch suivi par un hydrocraquage pour produire du carburant liquide de type diesel ou kérosène, soit une synthèse de méthane, soit une synthèse de méthanol, soit une synthèse du diméthyléther (DME).

12. Procédé de fonctionnement selon la revendication 9 ou 10, selon lequel on mélange en sortie du réacteur d'électrolyse l'hydrogène produit et récupéré dans les troisièmes ou alternativement quatrièmes lumières avec le monoxyde d'azote produit et récupéré dans les quatrièmes ou alternativement troisièmes lumières, pour produire un gaz en vue de réaliser la synthèse de l'ammoniac NH3.

13. Procédé de fonctionnement d'un réacteur d'électrolyse selon l'une des revendications 6 à 8, selon lequel :

- on alimente uniquement les premières (61, 71, 81) ou alternativement les deuxièmes (62, 72, 82) lumières en vapeur d'eau,
- on récupère l'hydrogène produit par l'électrolyse de la vapeur d'eau, dans les troisièmes (63, 73, 83) ou alternativement quatrièmes (64, 74, 84) lumières et simultanément l'oxygène produit par l'électrolyse de la vapeur d'eau, dans les cinquièmes (65, 75, 85) lumières.

14. Procédé de fonctionnement d'un réacteur d'électrolyse selon l'une des revendications 6 à 8, selon lequel :

- on alimente uniquement les premières (61, 71, 81) ou alternativement les deuxièmes (62, 72, 82) lumières en un autre gaz à électrolyser choisi parmi le dioxyde de carbone CO2 et le dioxyde d'azote NO2,
- on récupère le monoxyde de carbone ou le monoxyde d'azote produit par l'électrolyse de l'autre gaz dans les troisièmes (63, 73, 83) ou alternativement quatrièmes (64, 74, 84) lumières et simultanément l'oxygène produit par l'électrolyse de l'autre gaz dans les cinquièmes (65, 75, 85) lumières.

15. Procédé de fonctionnement selon l'une des revendications 9 à 14, selon lequel on alimente en outre la huitième (68) lumière de la première tôle d'extrémité (6), la sixième (76) lumière de la tôle centrale (7) et la septième (87) lumière de la deuxième tôle d'extrémité (8) par un gaz drainant, tel que de l'air.

## Patentansprüche

1. Verfahren zur Hochtemperaturelektrolyse von Wasserdampf $H_2O$ und einem anderen zu elektrolysierenden Gas, das ausgewählt ist unter Kohlendioxid $CO_2$ und Stickstoffdioxid $NO_2$, ausgeführt in einem Elektrolysereaktor, der eine Gruppe elementarer SOEC Elektrolysezellen (C1, C2, C3), die jeweils durch eine Kathode (2.1, 2.2, ...), eine Anode (4.1, 4.2, ...) und einen Elektrolyten (3.1, 3.2, ...) gebildet werden, der zwischen der Kathode und der Anode eingefügt ist, und eine Vielzahl von elektrischen und fluidischen Interkonnektoren (5) aufweist, die jeweils zwischen zwei benachbarten elementaren Zellen (C1, C2) angeordnet sind und mit einer ihrer Seiten in elektrischem Kontakt mit der Anode (4.1) einer (C1) der beiden elementaren Zellen stehen und mit der anderen ihrer Seiten in elektrischem Kontakt mit der Kathode (2.2) der anderen der beiden elementaren Zellen (C2) stehen, bei dem man den Wasserdampf zu der Kathode einer der beiden benachbarten elementaren Zellen zuführt und verteilt und das Kohlendioxid bzw. Stickstoffdioxid zu der Kathode der anderen der beiden elementaren Zellen zuführt und verteilt.

2. Verfahren zur Elektrolyse nach Anspruch 1, bei dem man einen Betriebsbereich im exothermen Modus für die Elektrolyse des Wasserdampfs an der Kathode einer der beiden benachbarten elementaren Zellen definiert und zugleich einen Betriebsbereich im endothermen Modus für die Elektrolyse des Kohlendioxids oder Stickstoffdioxids an der Kathode der anderen der beiden benachbarten elementaren Zellen realisiert, wobei die durch die Elektrolyse des Wasserdampfs freigesetzte Wärme dazu geeignet ist, zumindest einen Teil der für die Elektrolyse des Kohlendioxids oder Stickstoffdioxids benötigten Wärme zu liefern.

3. Verfahren zur Elektrolyse nach Anspruch 1, bei dem man einen Betriebsbereich im exothermen Modus für die Elektrolyse von Kohlendioxid oder Stickstoffdioxid an der Kathode der einen der beiden benachbarten elementaren Zellen definiert und zugleich einen Betriebsbereich im endothermen Modus für die Elektrolyse des Wasserdampfs an der anderen der beiden benachbarten elementaren Zellen realisiert, wobei die von der Elektrolyse des Kohlendioxids oder Stickstoffdioxids freigesetzte Wärme in der Lage ist, zumindest einen Teil der für die Elektrolyse des Wasserdampfs benötigten Wärme zu liefern.

4. Vorrichtung (5), die einen elektrischen und fluidischen Interkonnektor bildet, zur Hochtemperaturelektrolyse von Wasserdampf und einem anderen zu elektrolysierenden Gas, das ausgewählt unter Kohlendioxid $CO_2$ und Stickstoffdioxid $NO_2$, welche Vorrichtung aus drei ebenen Blechen (6, 7, 8) besteht, die längs zweier zueinander orthogonaler Symmetrieachsen (X, Y) ausgedehnt sind, wobei eines der endständigen Bleche dazu bestimmt ist, mit der Ebene einer Kathode (2) einer elementaren Elektrolysezelle (C2) in mechanischen Kontakt zu treten, und das andere der endständigen Bleche dazu bestimmt ist, mit der Ebene einer Anode (4) einer benachbarten elementaren Elektrolysezelle (C1) in mechanischen Kontakt zu treten, wobei jede der beiden benachbarten elementaren Elektrolysezellen eine SOEC-Zelle ist, die gebildet wird durch eine Kathode (2), eine Anode (4) und einen zwischen der Kathode und der Anode eingefügten Elektrolyten (3), in welcher Vorrichtung

- jedes der drei ebenen Bleche (6, 7, 8) einen nicht durchbrochenen zentralen Teil (60, 70, 80) hat und am Umfang ihres zentralen Teils durch wenigstens fünf Öffnungen (61, 62, 63, 64, 65; 71, 72, 73, 74, 75; 81, 82, 83, 84, 85) durchbrochen ist, wobei die ersten bis vierten Öffnungen (61 - 64; 71 - 74; 81 - 84) jedes Bleches auf einer Länge langgestreckt sind, die einem Teil der Länge des zentralen Teils in Richtung einer der Achsen X der Bleche entspricht, und paarweise beiderseits dieser Achse X verteilt sind, während die fünfte Öffnung (65, 75, 85) auf einer Länge langgestreckt ist, die im wesentlichen der Länge des zentralen Teils in Richtung der anderen ihrer Achsen Y entspricht,
- eines der endständigen Bleche (6), das als erstes endständiges Blech bezeichnet wird, weiterhin eine sechste Öffnung (66) und eine siebte Öffnung (67) aufweist, die symmetrisch beiderseits der Achse X innerhalb ihrer ersten bis vierten Öffnungen (61, 62, 63, 64) angeordnet und auf einer Länge langgestreckt sind, die im wesentlichen der Länge des zentralen Teils in Richtung der Achse X entspricht, während das andere (8) der endständigen Bleche, das als zweites endständiges Blech bezeichnet wird, weiterhin eine sechste Öffnung (86) innerhalb ihrer fünften Öffnung (85) aufweist und auf einer Länge langgestreckt ist, die im wesentlichen der Länge des zentralen Teils in Richtung der Achse Y entspricht, und
- die ersten (71), dritten (73) und fünften (75) Öffnungen des zentralen Bleches (7) in Bezug auf die erste (61, 81) bzw. dritte (63, 83) bzw. fünfte (65, 85) Öffnung jedes endständigen Bleches vergrößert sind, während die zweiten (62, 72, 82) und vierten (64, 74, 84) Öffnungen der drei Bleche im wesentlichen untereinander gleiche Abmessungen haben,
- all die vergrößerten Öffnungen (71, 73, 75, 76) des zentralen Bleches (7) in ihrem vergrößerten Teil Blechzungen (710) aufweisen, die so zueinander beabstandet sind, dass sie einen Kamm bilden, wobei jeder der Schlitze (711), der zwischen dem Rand eines vergrößerten Schlitzes (71, 73, 75, 76) und einer Zunge (710) oder zwischen zwei aufeinanderfolgenden Zungen gebildet sind, sich in eine (66) der inneren Öffnungen des ersten (6) oder zweiten (8) endständigen Bleches öffnet,
- die drei Bleche (6, 7, 8) so geschichtet und miteinander zusammengebaut sind, dass:

  - die Blechzungen (710) Abstandshalter zwischen ersten (6) und zweiten (8) endständigen Blechen jeweils zwischen den ersten (61) und sechsten (66) Öffnungen des ersten endständigen Bleches (6), zwischen den dritten (63) und siebten (67) Öffnungen des ersten endständigen Bleches (6) und zwischen den fünften (85) und sechsten (86) Öffnungen des zweiten endständigen Bleches (8) bilden,
  - jede der ersten bis fünften Öffnungen (61 - 65) des einen der drei Bleche jeweils individuell in Fluidverbindung mit einer entsprechenden der ersten bis fünften Öffnungen (71 - 75; 81 - 85) der beiden anderen Bleche steht,
  - die erste (61) oder alternativ die zweite (62) Öffnung des ersten (6) der endständigen Bleche über den Umweg der Schlitze der ersten vergrößerten Öffnung (71) des zentralen Bleches (7) in Fluidverbindung mit der sechsten (66) Öffnung des ersten endständigen Bleches (6) steht,
  - die dritte (63) oder alternativ die vierte (64) Öffnung des ersten endständigen Bleches (6) über den Umweg durch die Schlitze der vergrößerten dritten Öffnung (73) des zentralen Bleches (7) in Fluidverbindung mit der siebten (67) Öffnung des ersten endständigen Bleches (6) steht,
  - die fünfte (85) und die sechste (86) Öffnung des zweiten endständigen Bleches (8) über den Umweg durch die Schlitze der vergrößerten fünften Öffnung (75) des zentralen Bleches (7) in Fluidverbindung stehen.

5. Elektrischer und fluidischer Interkonnektor nach Anspruch 4, bei dem:

- das erste endständige Blech (6) außerdem eine achte Öffnung (68) aufweist, die auf einer Länge langgestreckt ist, die im wesentlichen der Länge des zentralen Teils in Richtung der anderen der Achsen Y entspricht und in Bezug auf die Achse Y gegenüberliegend zu ihrer fünften Öffnung (65) angeordnet ist,
- das zweite endständige Blech (8) außerdem eine siebte Öffnung (87) aufweist, die auf einer Länge langgestreckt ist, die im wesentlichen der Länge des zentralen Teils in der Richtung der anderen der Achsen Y entspricht und in Bezug auf die Achse Y gegenüberliegend zu ihrer fünften Öffnung (85) angeordnet ist, und eine achte Öffnung (88), die auf einer Länge langgestreckt ist, die im wesentlichen der Länge des zentralen Teils in Richtung der genannten Achse Y entspricht, und in Bezug auf die Achse Y gegenüberliegend zu ihrer sechsten Öffnung (86) angeordnet ist,
- das zentrale Blech (7) außerdem eine sechste Öffnung (76) aufweist, die in Bezug auf die achte Öffnung (68) des ersten endständigen Bleches (6) und die siebte Öffnung (87) des zweiten endständigen Bleches (8) vergrößert ist,
- die drei Bleche so miteinander verbunden sind, dass die längs der Achse (Y) des zweiten endständigen Bleches (8) langgestreckten siebten (87) und achten (88) Öffnungen durch den Umweg über die sechste Öffnung (76) des zentralen Bleches (7) miteinander in Fluidverbindung stehen.

6. Elektrolysereaktor mit einer Gruppe von SOEC Elektrolysezellen (C1, C2, C3), die jeweils durch eine Kathode (2.1, 2.2, ...), eine Anode (4.1, 4.2) und einen zwischen der Kathode und der Anode eingefügten Elektrolyten (3.1, 3.2) gebildet werden, und einer Vielzahl von elektrischen und fluidischen Interkonnektoren (5) nach einem der Ansprüche 4 bis 10, die jeweils zwischen zwei benachbarten elementaren Zellen angeordnet sind und mit dem ersten endständigen Blech (6) in elektrischem Kontakt mit der Kathode (2.1) der einen der beiden elementaren Zellen (C1) und mit dem zweiten endständigen Blech (8) in elektrischem Kontakt mit der Anode (4.2) der anderen dieser beiden elementaren Zellen (C2) stehen, bei dem in dem einen von zwei benachbarten Interkonnektoren die Fluidverbindung gebildet wird zwischen einerseits der ersten (61) und der sechsten (66) Öffnung des ersten endständigen Bleches (6) und andererseits der dritten (63) und der siebten (67) Öffnung des ersten endständigen Bleches, während in den beiden anderen benachbarten Interkonnektoren die Fluidverbindung gebildet wird zwischen einerseits der zweiten (62) und der sechsten (66) Öffnung des ersten endständigen Bleches und andererseits der vierten (64) und der siebten (67) Öffnung des ersten endständigen Bleches.

7. Elektrolysereaktor nach Anspruch 6, bei dem der elektrische Widerstand einer der beiden benachbarten elementaren Zellen (C1) von dem elektrischen Widerstand der anderen der beiden benachbarten elementaren Zellen (C2) verschieden ist.

8. Elektrolysereaktor nach Anspruch 7, bei dem die aktive Oberfläche wenigstens einer Elektrode von einer der beiden benachbarten elementaren Zellen von der aktiven Oberfläche wenigstens einer Elektrode der anderen der benachbarten elementaren Zellen verschieden ist.

9. Betriebsverfahren für einen Elektrolysereaktor nach einem der Ansprüche 6 bis 8, bei dem:

- man die ersten (61, 71, 81) Öffnungen mit Wasserdampf und gleichzeitig die zweiten (62, 72, 82) Öffnungen mit einem anderen zu elektrolysierenden Gas versorgt, das ausgewählt ist unter Kohlendioxid $CO_2$ und Stickstoffdioxid $NO_2$,
- man den durch Elektrolyse des Wasserdampfes erzeugten Wasserstoff in den dritten Öffnungen (63, 73, 83) sammelt und gleichzeitig das durch Elektrolyse des anderen Gases erzeugte Kohlenmonoxid oder Stickstoffmonoxid in den vierten Öffnungen (64, 74, 84) sammelt und gleichzeitig den sowohl durch die Elektrolyse des Wasserdampfs als auch durch die Elektrolyse des anderen Gases erzeugten Sauerstoff in den fünften Öffnungen (65, 75, 85) sammelt.

10. Betriebsverfahren für einen Elektrolysereaktor nach einem der Ansprüche 6 bis 8, bei dem:

- man den zweiten (62, 72, 82) Öffnungen Wasserdampf zuführt und gleichzeitig den ersten (61, 71, 81) Öffnungen ein anderes zu elektrolysierendes Gas zuführt, das ausgewählt ist unter Kohlendioxid $CO_2$ und Stickstoffdioxid $NO_2$,

- man den durch Elektrolyse des Wasserdampfs erzeugten Wasserstoff in den vierten Öffnungen (64, 74, 84) sammelt und gleichzeitig das durch Elektrolyse des anderen Gases erzeugte Kohlenmonoxid oder Stickstoffmonoxid in den dritten Öffnungen (63, 73, 83) sammelt und gleichzeitig den sowohl durch Elektrolyse des Wasserdampfs als auch durch Elektrolyse des anderen Gases erzeugten Sauerstoff in den fünften Öffnungen (65, 75, 85) sammelt.

11. Betriebsverfahren nach Anspruch 9 oder 10, bei dem man am Ausgang des Elektrolysereaktors den erzeugten und in den dritten Öffnungen oder alternativ den vierten Öffnungen gesammelten Wasserstoff mit dem in den vierten oder alternativ den dritten Öffnungen erzeugten und gesammelten Kohlenmonoxid mischt, um ein Synthesegas herzustellen, sei es für eine Synthese nach dem Fischer-Tropsch-Verfahren, gefolgt von einem Hydrocracking, um Diesel- oder Kerosin-Kraftstoff herzustellen, oder für eine Synthese von Methan, eine Synthese von Methanol oder eine Synthese von Dimethylether (DME).

12. Betriebsverfahren nach Anspruch 9 oder 10, bei dem man am Ausgang des Elektrolysereaktors den erzeugten und in den dritten oder alternativ den vierten Öffnungen gesammelten Wasserstoff mit dem erzeugten und in den vierten oder alternativ den dritten Öffnungen gesammelten Stickstoffmonoxid mischt, um ein Gas für die Synthese von Ammoniak $NH_3$ herzustellen.

13. Betriebsverfahren für einen Elektrolysereaktor nach einem der Ansprüche 6 bis 8, bei dem:

    - man nur den ersten (61, 71, 81) oder alternativ den zweiten (62, 72, 82) Öffnungen Wasserdampf zuführt,
    - man den durch Elektrolyse des Wasserdampfs erzeugten Wasserstoff in den drit-N ten Öffnungen (63, 73, 83) oder alternativ den vierten Öffnungen (64, 74, 84) sammelt und gleichzeitig den durch Elektrolyse des Wasserdampfs erzeugten Sauerstoff in den fünften Öffnungen (65, 75, 85) sammelt.

14. Betriebsverfahren für einen Elektrolysereaktor nach einem der Ansprüche 6 bis 8, bei dem:

    - man nur den ersten (61, 71, 81) oder alternativ den zweiten (62, 72, 82) Öffnungen ein anderes zu elektrolysierendes Gas zuführt, das ausgewählt ist unter Kohlendioxid $CO_2$ und Stickstoffdioxid $NO_2$,
    - man das durch Elektrolyse des anderen Gases erzeugte Kohlenmonoxid oder Stickstoffmonoxid in den dritten Öffnungen (63, 73, 83) oder alternativ den vierten Öffnungen (64, 74, 84) sammelt und gleichzeitig den durch Elektrolyse des anderen Gases erzeugten Sauerstoff in den fünften Öffnungen (65, 75, 85) sammelt.

15. Betriebsverfahren nach einem der Ansprüche 9 bis 14, bei dem man außerdem der achten Öffnung (68) des ersten endständigen Bleches (6), der sechsten Öffnung (76) des zentralen Bleches (7) und der siebten Öffnung (87) des zweiten endständigen Bleches (8) ein Drainagegas wie etwa Luft zuführt.

**Claims**

1. A method for high-temperature electrolysis of steam $H_2O$ and of another gas to be electrolyzed selected from carbon dioxide $CO_2$ and nitrogen dioxide $NO_2$, carried out in an electrolysis reactor comprising a stack of elementary electrolysis cells (C1, C2, C3) of the SOEC type each formed from a cathode (2.1, 2.2, etc.), an anode (4.1, 4.2, etc.) and an electrolyte (3.1, 3.2...) interposed between the cathode and the anode, and a plurality of electrical and fluidic interconnectors (5) each arranged between two adjacent elementary cells (C1, C2) with one of its faces in electrical contact with the anode (4.1) of one (C1) of the two elementary cells and the other of its faces in electrical contact with the cathode (2.2) of the other of the two elementary cells (C2), according to which steam is supplied and distributed to the cathode of one of the two adjacent elementary cells and either carbon dioxide or nitrogen dioxide is supplied and distributed to the cathode of the other of the two elementary cells.

2. The method of electrolysis as claimed in claim 1, according to which an operating regime in exothermic mode is defined for steam electrolysis at the cathode of one of the two adjacent elementary cells and simultaneously an operating regime in endothermic mode is established for electrolysis of carbon dioxide or nitrogen dioxide at the cathode of the other of the two adjacent elementary cells, the heat released by steam electrolysis being able to supply, at least partly, the heat required by the electrolysis of carbon dioxide or of nitrogen dioxide.

3. The method of electrolysis as claimed in claim 1, according to which an operating regime in exothermic mode is defined for electrolysis of carbon dioxide or nitrogen dioxide at the cathode of one of the two adjacent elementary cells and simultaneously an operating regime in endothermic mode is established for steam electrolysis of the other of the two adjacent elementary cells, the heat released by the electrolysis of carbon dioxide or nitrogen dioxide being able to supply, at least partly, the heat required by the steam electrolysis.

4. A device (5) forming an electrical and fluidic interconnector for high-temperature electrolysis of steam and another gas to be electrolyzed selected from carbon dioxide $CO_2$ and nitrogen dioxide $NO_2$, said device consisting of three flat sheets (6, 7, 8), elongated along two axes of symmetry (X, Y) orthogonal to one another, one of the end sheets being intended to come into mechanical contact with the plane of a cathode (2) of an elementary electrolysis cell (C2) and the other of the end sheets being intended to come into mechanical contact with the plane of an anode (4) of an adjacent elementary electrolysis cell (C1), each of the two adjacent elementary electrolysis cells of the SOEC type being formed from a cathode (2), an anode (4), and an electrolyte (3) interposed between the cathode and the anode, and in said device

- each of the three flat sheets (6, 7, 8) comprises an unperforated central part (60, 70, 80) and is perforated, at the periphery of its central part, with at least five openings (61, 62, 63, 64, 65; 71, 72, 73, 74, 75; 81, 82, 83, 84, 85), the first to fourth openings (61 to 64; 71 to 74; 81 to 84) of each sheet being elongated over a length corresponding to a part of the length of the central part along one of the X axes of the sheets and being distributed two by two on either side of said X axis, whereas the fifth opening (65, 75, 85) is elongated over a length roughly corresponding to the length of the central part along the other of the Y axes,
- one (6) of the end sheets, called first end sheet, further comprises a sixth (66) and seventh (67) openings arranged symmetrically on either side of the X axis, within its first to fourth openings (61, 62, 63, 64), and are elongated over a length roughly corresponding to the length of the central part along the X axis, whereas the other (8) of the end sheets, called second end sheet, further comprises a sixth opening (86) within its fifth opening (85), and elongated over a length roughly corresponding to the length of the central part along said Y axis, and,
- the first (71), third (73), and fifth (75) openings in the central sheet (7) being broadened relative to, respectively, the first (61, 81), third (63, 83) and fifth (65, 85) openings of each end sheet, whereas the second (62, 72, 82) and fourth (64, 74, 84) openings of the three sheets are of dimensions roughly identical to one another,
- all the broadened openings (71, 73, 75, 76) of the central sheet (7) comprise, in their broadened part, tongues of sheets (710) spaced apart forming a comb, each of the slits (711) defined between the edge of a broadened slit (71, 73, 75, 76) and a tongue (710) or between two consecutive tongues opening onto one (66) of the interior openings of the first (6) or second (8) end sheet,
- the three sheets (6, 7, 8) are stratified and assembled together so that:

• the tongues of sheets (710) form spacer frames between first (6) and second (8) end sheets respectively between the first (61) and sixth (66) openings of the first end sheet (6), between the third (63) and seventh (67) openings of the first end sheet (6), and between the fifth (85) and sixth (86) openings of the second end sheets (8),
• each of the first to fifth openings (61 to 65) of one of the three sheets is in fluid communication individually respectively with one of the corresponding first to fifth openings (71 to 75; 81 to 85) of the other two sheets,
• the first (61) or alternatively the second opening (62) of the first end sheet (6) is in fluid communication with the sixth opening (66) of the first (6) end sheet via the slits of the first (71) broadened opening of the central sheet (7),
• the third (63) or alternatively the fourth (64) opening of the first (6) end sheet is in fluid communication with the seventh opening (67) of the first (6) end sheet via the slits of the third (73) broadened opening of the central sheet (7),
• the fifth (85) and the sixth (86) openings of the second (8) end sheet are in fluid communication via the slits of the fifth (75) broadened opening of the central sheet (7).

5. The electrical and fluidic interconnector as claimed in claim 4, in which:

- the first (6) end sheet further comprises an eighth opening (68) elongated over a length roughly corresponding to the length of the central part along the other of the Y axes and arranged opposite its fifth opening (65) relative to the Y axis,
- the second (8) end sheet further comprises a seventh opening (87) elongated over a length roughly corresponding to the length of the central part along the other of the Y axes and arranged opposite its fifth opening (85) relative to the Y axis, and an eighth opening (88) elongated over a length roughly corresponding to the length of the central part along said Y axis, and arranged opposite its sixth opening (86) relative to the Y axis,

- the central sheet (7) further comprises a sixth opening (76) broadened relative to the eighth (68) of the first (6) end sheet and to the seventh (87) opening of the second (8) end sheet,
- the three sheets are assembled together in such a way that the seventh (87) and eighth (88) openings elongated along the Y axis of the second (8) end sheet are in fluid communication via the sixth opening (76) of the central sheet (7).

6. An electrolysis reactor comprising a stack of elementary electrolysis cells (C1, C2, C3) of the SOEC type each formed from a cathode (2.1, 2.2..), an anode (4.1, 4.2) and an electrolyte (3.1, 3.2) interposed between the cathode and the anode, and a plurality of electrical and fluidic interconnectors (5) as claimed in one of claims 4 to 10, each arranged between two adjacent elementary cells with the first (6) end sheet in electrical contact with the cathode (2.1) of one of the two elementary cells (C1) and the second (8) end sheet in electrical contact with the anode (4.2) of the other (C2) of the two elementary cells, in which, in one of two adjacent interconnectors, fluid communication is provided between on the one hand the first (61) and sixth (66) openings of the first (6) end sheet and on the other hand the third (63) and seventh (67) openings of the first end sheet, whereas in the other of the two adjacent interconnectors, fluid communication is provided between on the one hand the second (62) and sixth (66) openings of the first end sheet and on the other hand the fourth (64) and seventh (67) openings of the first end sheet.

7. The electrolysis reactor as claimed in claim 6, in which the electrical resistance of one of the two adjacent elementary cells (C1) is different from the electrical resistance of the other (C2) of the two adjacent elementary cells.

8. The electrolysis reactor as claimed in claim 7, in which the active surface area of at least one electrode of the two adjacent elementary cells is different from the active surface area of at least one electrode of the other of the adjacent elementary cells.

9. A method of operation of an electrolysis reactor as claimed in one of claims 6 to 8, according to which:

   - the first openings (61, 71, 81) are supplied with steam and simultaneously the second openings (62, 72, 82) are supplied with another gas to be electrolyzed selected from carbon dioxide $CO_2$ and nitrogen dioxide $NO_2$,
   - the hydrogen produced by steam electrolysis is recovered in the third openings (63, 73, 83) and simultaneously the carbon monoxide or nitrogen monoxide produced by the electrolysis of the other gas is recovered in the fourth openings (64, 74, 84) and simultaneously the oxygen produced both by electrolysis of steam and of the other gas, is recovered in the fifth openings (65, 75, 85).

10. A method of operation of an electrolysis reactor as claimed in one of claims 6 to 8, according to which:

   - the second openings (62, 72, 82) are supplied with steam and simultaneously the first openings (61, 71, 81) are supplied with another gas to be electrolyzed selected from carbon dioxide $CO_2$ and nitrogen dioxide $NO_2$,
   - the hydrogen produced by steam electrolysis is recovered in the fourth openings (64, 74, 84) and simultaneously the carbon monoxide or nitrogen monoxide produced by electrolysis of the other gas is recovered in the third openings (63, 73, 83) and simultaneously the oxygen produced both by electrolysis of steam and of the other gas is recovered in the fifth openings (65, 75, 85).

11. The method of operation as claimed in claim 9 or 10, according to which the hydrogen produced and recovered in the third or alternatively the fourth openings is mixed at the outlet of the electrolysis reactor with the carbon monoxide produced and recovered in the fourth or alternatively the third openings, to produce a synthesis gas with a view to performing either a synthesis according to the Fischer-Tropsch process followed by hydrocracking to produce liquid fuel of the diesel or kerosene type, or synthesis of methane, or synthesis of methanol, or synthesis of dimethyl ether (DME).

12. The method of operation as claimed in claim 9 or 10, according to which the hydrogen produced and recovered in the third or alternatively the fourth openings is mixed at the outlet of the electrolysis reactor with the nitrogen monoxide produced and recovered in the fourth or alternatively the third openings, to produce a gas with a view to performing synthesis of ammonia $NH_3$.

13. A method of operation of an electrolysis reactor as claimed in one of claims 6 to 8, according to which:

   - only the first (61, 71, 81) or alternatively the second (62, 72, 82) openings are supplied with steam,
   - the hydrogen produced by steam electrolysis is recovered in the third (63, 73, 83) or alternatively the fourth (64, 74, 84) openings and simultaneously the oxygen produced by steam electrolysis is recovered in the fifth (65, 75, 85) openings.

14. A method of operation of an electrolysis reactor as claimed in one of claims 6 to 8, according to which:

- only the first (61, 71, 81) or alternatively the second (62, 72, 82) openings are supplied with another gas to be electrolyzed selected from carbon dioxide $CO_2$ and nitrogen dioxide $NO_2$,
- carbon monoxide or nitrogen monoxide produced by electrolysis of the other gas is recovered in the third (63, 73, 83) or alternatively the fourth (64, 74, 84) openings and simultaneously the oxygen produced by electrolysis of the other gas is recovered in the fifth (65, 75, 85) openings.

15. The method of operation as claimed in one of claims 9 to 14, according to which in addition the eighth opening (68) of the first end sheet (6), the sixth opening (76) of the central sheet (7) and the seventh opening (87) of the second end sheet (8) are supplied with a draining gas, such as air.

# Fig.1

# Fig.2

Fig.3

e⁻

5

CO2/CO
O2
2.1
3.1 } C₁
4.1

H2O/H2
O2
3.2 } C₂

CO2/CO
O2
5 } C₃

e⁻

Fig.4

e⁻

NO2/NO
O2
2.1
3.1 } C₁
4.1

H2O/H2
O2
} C₂
3.2

NO2/NO
O2
5 } C₃

e⁻

EP 2 931 943 B1

Fig.5

Fig.5A

Fig.5B

28

Fig.6A

Fig.6B

Fig.6C

Fig.7A

Fig.7B

Fig.7C

Fig.8

$$R_3 = R_1$$
$$T_3 = T_1$$

$$R_3 > R_2$$
$$T_3 > T_2$$

$$R_2$$
$$T_2$$

$$R_1 > R_2$$
$$T_1 > T_2$$

Fig.9

$$R_3 = R_1$$
$$T_3 = T_1$$

$$R_3 < R_2$$
$$T_3 < T_2$$

$$R_2$$
$$T_2$$

$$R_1 < R_2$$
$$T_1 < T_2$$

## Fig.10A

## Fig.10B

## Fig.11

## Fig.12A

Ratio de Surface CO2/H2O

## Fig.12B

Ratio de Surface CO2/H2O

Fig.13

**EP 2 931 943 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•   US 20090289227 A

**Littérature non-brevet citée dans la description**

•   **J. LAURENCIN et al.** Modelling of solide steam électrolyser : Impact of the operating conditions on hydrogen productions. *Journal of Power Source,* 2011, vol. 196, 2080-2093